# EUROPEAN PATENT APPLICATION

(11) **EP 4 734 201 A1**
(43) Date of publication of application: **29.04.2026**
(21) Application number: 25210792.5
(22) Date of filing: 23.10.2025
(51) Int. Cl.: H01M 10/04, H01M 50/107, H01M 50/152, H01M 50/538, H01M 50/645

(54) **COVER FOR A BATTERY CELL AND BATTERY CELL, BATTERY PACK/MODULE AND VEHICLE INCLUDING THE SAME**

(30) Priority: 25.10.2024 KR 20240147566
(71) Applicant: LG Energy Solution, Ltd., Seoul 07335 (KR)
(72) Inventor: LEE, Seung-Hun, Daejeon 34122 (KR); CHO, Sung-Min, Daejeon 34122 (KR); KIM, Do-Gyun, Daejeon 34122 (KR); BAEK, Jun-Ho, Daejeon 34122 (KR); HONG, Tae-Rim, Daejeon 34122 (KR)
(74) Representative: Goddar, Heinz J.

(57) **Abstract**

A cover (300) is configured to cover an open end of a battery housing of the battery cell (10) for accommodating an electrode assembly (100) in the battery housing (200). The cover has an injection hole (H1) to be sealed by a plug (400). The cover comprises a flat portion (310) surrounding the injection hole, an edge portion (320) formed at an edge of the cover so as to be coupled to the battery housing, and a plurality of electrode coupling portions (330) configured to be coupled to the electrode assembly of the battery cell. The electrode coupling portions are arranged between the flat portion and the edge portion and are spaced apart from each other. The electrode coupling portions are respectively formed as a depression that is recessed from the flat portion for the flat portion to be spaced apart from the electrode assembly when the electrode coupling portions are coupled to the electrode assembly.

## Description

### TECHNICAL FIELD

The present disclosure relates to a cover for a battery cell and to a battery cell, a battery pack or battery module and a vehicle including the same.

### BACKGROUND ART

A cylindrical battery cell may have a structure that accommodates a wound electrode assembly (e.g., a jelly-roll type electrode assembly) inside a cylindrical housing (also referred to as can herein), e.g., a cylindrical metal can. A cylindrical battery cell may be more resistant to shock and temperature than a pouch-type battery. Accordingly, demand for metal can-type cells as battery cells applied to battery packs, e.g., for vehicles is increasing.

The process of manufacturing a battery cell using a cylindrical battery can may include the steps of deep-drawing a sheet such as a metal sheet to form a circular bottom portion and a circular tubular sidewall portion connected thereto, accommodating an electrode assembly therein, and then covering the open end of the sidewall portion with a cover (which may also be referred to as lead herein) to finish it.

The method of covering the open end of the battery can with a cover and fixing the cover and the battery can may be applied by crimping and/or seam welding.

In the seam welding method, the perimeter of the open end (front end) of the sidewall portion of the battery can and the perimeter of the edge of the cover may be welded (e.g., butt-welded) along the perimeter direction. Since the fixing structure is simple, the volume of the electrode assembly that may be accommodated inside the battery can may be secured. Therefore, the seam welding method, may be more advantageous in securing electric capacity per the same volume of the battery can.

### DISCLOSURE

### Technical Problem

However, when filling the battery can with electrolyte and covering the open end of the battery can with a cover and welding it, there is a possibility that the high temperature heat or plasma flame generated by welding may deteriorate or ignite when it comes into contact with electrolyte vapor in the air at a certain concentration level or above.

For example, if the battery can and the cover are made of stainless steel (e.g., SUS), the surface temperature may rise to high temperatures such as for example 1400°C, which is the melting point of SUS. Such high temperatures may cause ignition of the electrolyte.

Accordingly, when fixing the open end of the battery can and the cover by seam welding, a method may be applied in which a battery can having an injection hole provided in the bottom portion or a cover having an injection hole is prepared, an electrode assembly is accommodated inside the battery can, the battery can and the cover are seam-welded, electrolyte is injected through the injection hole, and the injection hole is sealed after the completion of injection.

The use of ball or plug press-fitting, welding, and/or adhesive may be considered for sealing the injection hole. The design and finishing method of the injection hole should ensure a secure seal without damaging the electrode assembly, but there is currently no proper injection hole design and finishing method.

The present disclosure may be designed to solve such problems of the related art. Therefore, the present disclosure may for example be directed to providing a cover that is sealed by welding a plug to an injection hole, but may be configured so that the welding heat during plug welding does not affect the electrode assembly and/or the plug is not damaged by the vaporization heat of the electrolyte.

In addition or in the alternative, the present disclosure may for example also be directed to providing a cover in which the flatness with the electrode assembly is stably and evenly formed, thereby, e.g., improving the welding quality with the electrode assembly.

In addition or in the alternative, the present disclosure may for example also be directed to providing a lead by which various dimensions such as weld flatness with the electrode assembly, weld length, and injection hole diameter may be aligned.

In addition or in the alternative, the present disclosure may for example also be directed to providing a battery cell including a sealing structure in which the above cover and a battery can may be butt-welded.

In addition or in the alternative, the present disclosure may for example also be directed to providing a battery pack or battery module including such a battery cell.

In addition or in the alternative, the present disclosure may for example also be directed to providing a vehicle including such a battery cell, battery pack or battery module.

However, the problems to be solved by the present disclosure are not limited to the above problems, and other problems not mentioned herein will be clearly understood by those skilled in the art from the following disclosure.

### Technical Solution

Against this background, the present disclosure provides a cover for a battery cell and a battery cell comprising a cover.

Any feature or combination(s) of features described herein with regard to the cover according to the present disclosure may also be present for the battery cell according to the present disclosure, and vice-versa. For the sake of brevity and to avoid unnecessary repetition, certain feature(s) or combination(s) of features may therefore only be described once with regard to either the cover or the battery cell but may likewise apply to the other one of the cover and the battery cell.

The present disclosure provides a cover for a battery cell, in particular a cylindrical battery cell. The cover is configured to cover an open end of a battery housing of the battery cell for accommodating an electrode assembly in the battery housing. The cover has an injection hole to be sealed by a plug. The cover comprises a flat portion surrounding the injection hole and an edge portion formed at an edge of the cover so as to be coupled to the battery housing. The cover further comprises a plurality of electrode coupling portions that are configured to be coupled to the electrode assembly of the battery cell. The electrode coupling portions are arranged between the flat portion and the edge portion and are spaced apart from each other. The electrode coupling portions are respectively formed as a depression that is recessed from the flat portion for the flat portion to be spaced apart from the electrode assembly when the electrode coupling portions are coupled to the electrode assembly.

The battery cell (e.g., some or all of the battery housing, the electrode assembly and the plug) may be embodied as described below for the battery cell according to the present disclosure. The battery cell may in particular be the battery cell according to the present disclosure (i.e., according to any one of the embodiments thereof described herein).

The cover (which may also be referred to as lead herein) is configured to cover (e.g., close and/or seal) the open end of the battery housing (e.g., an opening at the open end), wherein the open end (e.g., said opening) is for accommodating the electrode assembly in the battery housing (e.g., for inserting the electrode assembly into the battery housing through the open end).

The cover may for example be embodied as a lid (e.g., can lid), a cap or the like. The cover may be integrally formed as a single piece (e.g., be a monolithic structure rather than a multi-piece assembly). The cover may be made of (e.g., comprise or consist of) an electrically conductive material such as metal. The cover may have a plate shape and in particular a disk shape, e.g., be an (at least substantially) flat or planar structure having a substantially larger lateral extent (e.g., lateral physical dimension such as diameter, or width and length) than perpendicular/axial extent (e.g., perpendicular/axial physical dimension such as thickness or height). For example, an axial extent (e.g., height) of the cover may be between 0.2 mm and 5 mm, in some examples between 0.5 mm and 2 mm. A lateral extent (e.g., diameter) of the cover (which may, e.g., correspond (at least approximately) to a lateral extent of the battery cell) may for example be between 10 mm and 100 mm, in some examples between 40 mm and 50 mm. The cover may be formed of a sheet of material (e.g., metal) having a uniform thickness or at least a substantially uniform thickness (e.g., varying by less than 50%, in some examples less than 30% across the entire cover).

The cover may have a first side (e.g., first face or surface) that, when the cover covers the open end of the battery housing, is to face inwards (e.g., face towards the interior of the battery housing and in particular the electrode assembly) and a second side (e.g., second face or surface) that, when the cover covers the open end of the battery housing, is to face outwards (e.g., face away from the interior of the battery housing and in particular the electrode assembly). The first side may thus also be referred to as the inner side, interior side or bottom (or lower) side of the cover, whereas the second side may also be referred to as the outer side, exterior side or top (or upper) side of the cover.

Other relative geometric terms (such as upper/top, lower/bottom, higher/further outside or lower/further inside) in relation to the cover may be used in the same sense. An object (e.g., element, structure or the like) being higher (or lower) than another object, or being the upper/top (or lower/bottom) one as compared to the other object, may for example refer to the respective object being arranged farther (or closer, respectively) in the direction from the first side to the second side (e.g., further away (or closer, respectively) from the electrode assembly and/or a center of the battery housing than the other object).

The direction from the first side to the second side of the cover (e.g., perpendicular to one or both of the first and second sides) may also be referred to as the axial or normal direction (of the cover) herein and may, in some examples, coincide (e.g., be parallel to and, optionally, aligned with) with one or both of a winding axis or winding axis direction of the electrode assembly and an axis (e.g., a height or vertical direction) of the battery housing. The axial direction may be perpendicular to a plane of the cover. A direction perpendicular to the axial direction (e.g., parallel to the plane of the cover) may be referred to a lateral or transverse direction. In some examples, a cylindrical coordinate system may be used for describing the cover and/or the battery cell, wherein a radial direction may refer to a direction extending radially outwards relative to the axial direction (e.g., away from a center or symmetry axis of the cover and the battery cell, respectively) and a circumferential (or azimuthal) direction may refer to a direction (perpendicular to the axial direction and the radial direction) extending (azimuthally) around the axial direction (e.g., around a circumference of the cover and the battery cell, respectively).

The cover may have an injection hole (e.g., injection port or opening) formed therein, which may e.g., be for injection of an electrolyte (electrolyte injection hole) into the battery housing through the cover. The injection hole may be formed at a center of the cover. The injection hole may for example be embodied as an elliptical, circular or polygonal hole.

The injection hole is to be sealed by a plug, e.g., by inserting the plug therein and/or arranging the plug over the injection hole (e.g., covering the injection hole). The plug may be provided together with the cover (e.g., as a kit comprising the cover and the plug) or separate therefrom, e.g., as part of the battery cell. The plug may for example be embodied as detailed below for the battery cell according to the present disclosure.

In some examples, the cover may comprise an (e.g., annular, in particular circular annular) flat portion that surrounds the injection hole (e.g., along the circumferential direction), for example with the injection hole being arranged at a center of the flat portion. The flat portion may for example extend perpendicular or substantially perpendicular to the axial direction (e.g., at a same height). The flat portion may not comprise any protrusions and/or depressions protruding and depressed, respectively, in the axial direction.

As used herein, two directions or objects (e.g., elements, structures or the like) being substantially perpendicular may for example refer to the directions and objects, respectively, being (e.g., extending or projecting) at an angle of between 70° and 110°, in some examples between 80° and 100°, in one example between 85° and 95° and in one example between 88° and 92° to each other. As used herein, two directions or objects being substantially parallel (or being/extending in substantially the same direction) may for example refer to the directions and objects, respectively, being (e.g., extending or projecting) at an (acute) angle of between -20° and 20°, in some examples between -10° and 10°, in one example between -5° and 5° and in one example between -2° and 2° to each other.

In some examples, the cover may further comprise an edge portion that is formed at an edge (e.g., along an outer circumference) of the cover (e.g., surrounding the flat portion) so as to be coupled (e.g., welded and/or otherwise bonded and/or attached) to the battery housing. The edge portion may for example be configured to be coupled to a sidewall (e.g., a sidewall portion) of the battery housing, for example an inner (e.g., inward facing) surface of the sidewall and/or an edge of the sidewall (e.g., a rim or upper surface of the sidewall, which may for example extend between inner and outer surfaces of the sidewall). The edge portion of the cover may be located at and may form the outer radial perimeter of the cover. The edge portion of cover may be formed with a profiled geometry adapted to engage the battery housing (e.g., the inner surface of the sidewall thereof). The edge portion may for example have a curved or contoured shape. In an example implementation, a cross-section of the edge portion may be approximately U-shaped.

In some examples, the cover may further comprise a plurality of electrode coupling portions. The electrode coupling portions are arranged between the flat portion and the edge portion (e.g., along the radial direction), for example such that the edge portion surrounds the electrode coupling portions. The electrode coupling portions may be arranged along an outer circumference of the flat portion. The electrode coupling portions may each extend between the flat portion and the edge portion of the cover (e.g., along the radial direction). The electrode coupling portions may each be flat, for example extend perpendicular or substantially perpendicular to the axial direction (e.g., at a same height) and/or may not comprise any protrusions and/or depressions protruding and depressed, respectively, in the axial direction.

The electrode coupling portions (e.g., a first/bottom/inner surface thereof on the first/bottom/inner side of the cover) are each configured to be coupled (e.g., welded or otherwise bonded and/or attached in an electrically conductive manner) to the electrode assembly of the battery cell. The electrode coupling portions may in particular be configured to be directly coupled to the electrode assembly of the battery (for example to one or more electrode tabs thereof), e.g., in direct contact with the electrode assembly without any other elements such as a separate current collector) arranged therebetween.

The cover, in particular the electrode coupling portions, may be configured to provide an electrical connection to the electrode assembly (e.g., from the outside of the battery housing). The cover may thus also be referred to as a lead for/of the battery cell in some examples. The cover, in particular the electrode coupling portions, may be configured to act as (e.g., form or provide) a current collector, for example for collecting current from a plurality of electrode tabs and/or a plurality of electrodes (or different portions of a same electrode) of the electrode assembly. The cover may form or may comprise a terminal for/of the battery cell in some examples.

The electrode coupling portions may be spaced apart from each other (e.g., in the circumferential direction), for example so as to be spatially separated by other (structurally different) portions of the cover arranged therebetween such as the bridges described below. The electrode coupling portions may be arranged equidistantly and/or equiangularly (e.g., along the circumferential direction), for example along the outer circumference of the flat portion.

The electrode coupling portions (e.g., a second/upper/outer surface thereof on the second/upper/outer side of the cover) may be respectively formed as a depression (on the second side of the cover) that is recessed (e.g., recessedly formed, set back, depressed and/or indented) from the flat portion (e.g., a second/upper/outer surface thereof). Put differently, the electrode coupling portions may each be arranged lower (at a lower height/further inward as seen from the electrode assembly) than the flat portion (or, in yet other words, the flat portion may protrude relative to the electrode coupling portions on the second side of the cover). Thereby, when the electrode coupling portions (e.g., the first/bottom surface thereof) are coupled to the electrode assembly (for example when the cover covers the open end of the battery housing), the flat portion (e.g., a first/bottom surface thereof) is spaced apart (e.g., spatially separated by a gap) from the electrode assembly. The electrode coupling portions may for example each be recessed from the flat portion by a distance of between 1.0 mm and 3.0 mm, in some examples between 1.5 mm and 2.5 mm and in some examples between 1.75 mm and 2.25 mm (wherein distance may, e.g., be the distance/height difference between the upper surfaces of the respective portions and/or between the inner surfaces of the respective portions). On the first side of the cover, the electrode coupling portions may protrude further than any other part of the cover (and/or on the second side of the cover, may be recessed further than any other part of the cover), e.g., be the lowest most/innermost portion of the cover.

Put differently, in one example, there is provided a cover/lead configured to cover an open end formed at one side of a battery housing of a battery cell, and the cover/lead having an injection hole formed (e.g., at a center), into which a plug is to be inserted into the injection hole for sealing the injection hole, wherein the cover/lead may include a flat portion surrounding the injection hole, an edge portion formed at an edge so as to be coupled to the battery housing, and a plurality of electrode coupling portions coupled to (or configured to be coupled to) the electrode assembly to be spaced apart from each other between the flat portion and the edge portion and respectively formed as a depression (e.g., an engraved depression), wherein the flat portion may be arranged to be spaced apart from the electrode assembly in a winding axis direction of an electrode assembly of the battery cell (which may coincide with the axial/normal direction of the cover/lead), e.g., when the electrode coupling portions are coupled to the electrode assembly.

In any of the above, the cover/lead may further comprise a plug coupling portion onto (e.g., into) which the plug is to be seated and coupled (e.g., welded). The plug coupling portion may have the injection hole formed therein (e.g., at a center thereof). In some examples, the plug may be to be inserted into the plug coupling portion (e.g., into the injection hole formed therein). The plug coupling portion may be a portion that extends inwardly (e.g., in the radial direction) from the flat portion (e.g., towards the injection hole). The plug coupling portion may have an annular shape extending around the injection hole. The flat portion may surround (and optionally abut) the plug coupling portion, e.g., along the circumferential direction. The plug coupling portion may be connected to the flat portion. The plug coupling portion may be configured to receive and retain the plug (e.g., configured for the plug to be inserted and held in place therein and/or thereon). The plug coupling portion may be disposed along the periphery (e.g., outer circumference) of the injection hole.

Put differently, in some examples, the cover/lead may further include a plug coupling portion into which the plug is inserted and seated and coupled, the plug coupling portion having the injection hole formed in the center.

In some examples, a step may be formed between the plug coupling portion and the flat portion (e.g., in the radial direction). Put, differently, the plug coupling portion and the flat portion may for example be portions in which a step is formed, e.g., in a radial direction. For example, an outer surface of the plug coupling portion may be recessed from the outer surface of the flat portion, e.g., towards the first/inner side of the cover (whereas inner surface of the plug coupling portion and the flat portion may for example be flush (e.g., at the same height) with each other). The step may have a height (e.g., the distance by which the outer surface of the plug coupling portion is recessed from the outer surface of the flat portion) of between 0.10 mm and 0.50 mm, in some examples between 0.20 mm and 0.40 mm and in some examples between 0.25 mm and 0.35 mm.

Additionally or alternatively, the plug coupling portion may be formed to have a thinner thickness (e.g., measured in the axial direction/perpendicular to the first side of the cover) than the flat portion (wherein the aforementioned step may for example result from the reduced thickness of the plug coupling portion as compared to the flat portion). A difference between the thickness of the plug coupling portion and the thickness of the flat portion may for example be between 0.10 mm and 0.50 mm, in some examples between 0.20 mm and 0.40 mm, in some examples between 0.25 mm and 0.35 mm and in one example between 0.28 mm and 0.32 mm. A thickness of the flat portion may for example be 0.50 mm or more and 0.70 mm or less, in some examples 0.55 mm or more and 0.65 mm or less, in one example 0.58 mm or more and 0.62 mm or less.

Put differently, the plug coupling portion may be formed to have a thinner thickness than the flat portion and, optionally, may be a portion that extends inwardly in the radial direction from the flat portion.

The plug coupling portion (e.g., the seating portion thereof described below) may form a seat onto which the plug (e.g., the coupling portion thereof) is to be seated (and, e.g., be laterally retained by the step). The plug coupling portion (e.g., the seating portion thereof) may be configured to receive and engage a corresponding lower surface of the plug (e.g., of the coupling portion of the plug). The plug (e.g., the coupling portion thereof) and the plug coupling portion (of the cover) may be coupled (e.g., bonded and/or otherwise attached) to each other, for example, by welding. The height of the step formed between the plug coupling portion and the flat portion of the cover and/or the difference in height between these portions may be chosen so as to be equal to or less than a thickness of the plug (e.g., the coupling portion thereof), for example such that an upper surface of the plug (e.g. the coupling portion thereof) is at a height equal to or less than (e.g., flush with or recessed from) the upper surface of the flat portion of the cover when the plug is seated onto the plug coupling portion.

The plug coupling portion may comprise a seating portion onto which the plug is to be seated (wherein the aforementioned step may for example be formed between the between the seating portion and the flat portion and/or wherein the seating portion may have the aforementioned thinner thickness than the flat portion). The seating portion may serve as a seating surface (e.g., form a seat for) the plug. The seating portion may be configured to laterally retain the plug, e.g., by means of the aforementioned step or thickness difference). The seating portion (e.g., an upper surface thereof) may be flat, e.g., extend parallel or substantially parallel to the (e.g., upper surface of) the flat portion.

The plug coupling portion may optionally further comprise a guide portion (which may also be referred to as insertion portion) bordering the injection hole (e.g., being arranged between the injection hole and the seating portion). The guide portion (e.g., at its inner periphery) may form an outer border (e.g., an outer edge, rim and/or sidewall) of the injection hole. The guide portion may be configured to receive and guide the plug (e.g., the insert portion thereof) into the injection hole. Optionally, the guide portion may be configured to retain the plug (e.g., the insert portion thereof) in the injection hole. (e.g., by means of a press fit, force fit and/or shape fit). The guide portion (e.g., the inclined part thereof described below) may for example be configured to exert a spring force onto the plug when the plug is inserted into the injection hole.

In some examples, at least a part of the guide portion may be inclined at an angle from the seating portion (e.g., an outer and/or inner surface thereof) so as to extend (e.g., protrude) from the seating portion inwardly into the battery housing (e.g., towards the battery assembly). The guide portion (e.g., without the plug being arranged inserted may for example extend at an angle of between 30° and 90°, in some examples of between 45° and 85°, in one example of between 60° and 80° to the seating portion (which, in turn, may for example extend perpendicularly or substantially perpendicularly to the axial direction). The guide portion may for example form a collar (e.g., a flange or projecting rim) surrounding the injection hole.

In some examples, for one or both of the flat portion and the plug coupling portion, a distance by which the respective portion (e.g., the upper surface thereof) protrudes above the electrode coupling portions (e.g., in the direction from the first/lower side to the second/upper side of the cover) is larger than the respective distance for the parts of the cover other than the flat portion and/or the plug coupling portion (e.g., at least the edge portion and, optionally and if present, the bridge(s) and the picking portion(s) of the cover). One or both of the flat portion and the plug coupling portion (e.g., the upper surface(s) thereof) may protrude (e.g., on the second side of the cover) beyond all other parts of the cover (e.g., in the direction from the first/lower side to the second/upper side of the cover) or, put differently, all other parts of the cover (e.g., the upper surfaces thereof) may be recessed as compared to one or both of the flat portion and the plug coupling portion (e.g., in the direction from the second/upper side to the first/lower side of the cover). The flat portion and/or the plug coupling portion may be the highest (uppermost/outermost) structures on the second side of the cover, e.g., so as to be furthest away from the electrode assembly when the electrode coupling portions are coupled to the electrode assembly.

Put differently, in some examples, a distance between the flat portion and the electrode assembly may be arranged to be spaced apart most in the winding axis direction than other parts of the cover/lead (e.g., when the electrode coupling portions are coupled to the electrode assembly).

One or both of the flat portion and the plug coupling portion (e.g., the upper surface thereof) may for example protrude by at least 0.1 mm, in some examples at least 0.2 mm, in some examples at least 0.5 mm, in one example at least 1.0 mm and in one example at least 1.5 mm beyond the edge portion and, preferably, beyond all other parts of the cover (e.g., in the direction from the first/lower side to the second/upper side of the cover), for example by up to 1.5 mm, in some examples by up to 2.0 mm and in one example by up to 2.5 mm (e.g., between 0.1 mm and 2.5 mm, in some examples by between 0.2 mm and 1.5 mm).

In some examples, the flat portion may extend over a length of 2 mm or more, preferably 3 mm or more, in one example 4 mm or more in a direction away from the injection hole (e.g., along the radial direction), for example from the plug coupling portion to the electrode coupling portions.

The cover may further comprise a plurality of electrode coupling portions (or, put differently, the electrode coupling portion may be provided in plurality). The plurality of electrode coupling portions may for example comprise between two and ten electrode coupling portions, in some examples between three and six electrode coupling portions, in one example three electrode coupling portions (or, put differently, the electrode coupling portion may be provided in three pieces).

The cover may further comprises one or more bridges (which may also be referred to as bridge portions), each extending from the flat portion towards (and, optionally, to) the edge portion (e.g., in the radial direction) and formed to partition (e.g., partitioning) two adjacent electrode coupling portions (e.g., arranged between and spatially separating the two adjacent electrode coupling portions, for example along the circumferential direction). Put differently, in some examples, the cover/lead may further include at least one bridge extending in a radial direction from the flat portion and formed to partition two adjacent electrode coupling portions.

The bridge(s) may be structurally different from the respective two adjacent electrode coupling portions, e.g., arranged at a different height/position along the axial direction and/or being formed with a different thickness. The bridge(s) (e.g., the upper surface(s) thereof) may in particular each protrude above the respective two adjacent electrode coupling portions (e.g., in the direction from the first side to the second side of the cover), for example by at least by at least 0.1 mm, in some examples at least 0.2 mm, in some examples at least 0.5 mm, in one example at least 1.0 mm and in one example at least 1.5 mm. Additionally or alternatively, the bridge(s) (e.g., the upper surface(s) thereof) may be recessed from the flat portion (e.g., in the direction from the first side to the second side of the cover), for example by at least by at least 0.1 mm, in some examples at least 0.5 mm, in some examples at least 1.0 mm, in one example at least 1.5 mm and in one example at least 2.0 mm. The bridge(s) may for example be embodied as stays or ribs protruding above the electrode coupling portions.

For some or all of the bridge(s), a width of the bridge in a direction between the two adjacent electrode coupling portion (e.g., along the circumferential direction/ perpendicular to the radial and axial directions) may be smaller (e.g., at least 5% smaller, in some examples at least 10% smaller, in one example at least 20% smaller) than one or both of an inner diameter of the injection hole and an (e.g., outer) diameter of the plug coupling portion. Additionally or alternatively, the bridge(s) may for example each have a width between 1 mm and 10 mm, in some examples between 1.5 mm and 8 mm, in one example between 2 mm and 5 mm.

The plurality of the electrode coupling portions may be formed and arranged rotationally symmetrically (e.g., radially rotationally symmetrically) with respect to the injection hole (and/or with respect to the center of the cover). The electrode coupling portions may for example be arranged equiangularly (i.e., at same separation angles between adjacent electrode coupling portions) about the injection hole and/or the center of the cover and at a same (radial) distance therefrom.

For some or all of the electrode coupling portions, the flat portion may have a respective concave portion (which may also be referred to as bent portion) formed to be recessed toward the injection hole (e.g., in a radial direction), for example from an outer circumference (e.g., sidewall) of the flat portion. As seen along the axial direction, each concave portion may for example define (e.g., surround) a cutout or indentation in the outer circumference of the flat portion (e.g., correspond to a portion of reduced diameter/radial extent of the flat portion).

Optionally, the respective electrode coupling portion may have an extension portion extending (e.g., extended) toward the concave portion (e.g., protruding radially inwardly from an inner circumference/boundary of the electrode coupling portion toward the injection hole). The extension portion may for example extent into (and in some examples across the entire) cutout or indentation defined by the respective concave portion. The extension portion (e.g., a lower and/or upper surface thereof) may be level with the remainder of the electrode coupling portion (e.g., form a flat surface therewith).

In some examples, the cover may further comprise a vent portion (which may also be referred to as bent notch portion) formed between the electrode coupling portions and the edge portion. The vent portion may be configured to break (e.g., rupture and/or deform) when the internal pressure within the battery housing exceeds a preset value (threshold pressure). The vent portion may for example comprise one or more predetermined breaking lines and/or areas (e.g., a structurally weakened portion of the cover such as a line or area of reduced thickness, for example in the form of a notch or groove). The vent portion (e.g., one or more of the predetermined breaking lines and/or areas thereof) may surround the electrode coupling portions (e.g., along the circumferential direction).

A cross-section of the edge portion (e.g., in a plane perpendicular to the cover, for example in the plane perpendicular to the circumferential direction/spanned by the radial and axial directions) may have a curved shape (e.g., recessed from the second side of the cover and/or protruding from the first side of the cover), in particular a U-shape. The edge portion may for example comprise a groove (e.g., in the second side of the cover) surrounding the electrode coupling portions (and, optionally, the vent portion).

The cover may comprise one or more picking portions arranged between two adjacent electrode coupling portions and the edge portion (e.g., arranged between the two electrode coupling portions along the circumferential direction and between the electrode coupling portions and the edge portion along the radial direction). The picking portion(s) may each form (e.g., comprise) a picking area that may for example be to be picked (e.g., gripped or otherwise held and/or secured, e.g., by suction) by a picking device. The picking portion(s) may for example each be flat (e.g., have at least a flat upper surface). The picking portion(s), e.g., the upper surface(s) thereof, may be arranged at a same height (in the axial direction) as the flat portion or may be recessed from the flat portion (along the axial direction), for example at a height between the electrode coupling portions (and, optionally, the bridge(s)) and the flat portion (e.g., elevated as compared to one or both of the electrode coupling portions and the bridge(s)). The picking portion(s) may each be substantially V-shaped or U-shaped (e.g., as seen along the axial direction).

In addition to the above, the cover according to any one of the embodiments set forth above may comprise any feature or combination(s) of features described herein for the exemplary embodiments from the figures and/or for the battery cell according to the present disclosure (i.e., according to any one of the embodiments thereof described herein).

The cover may be provided as part of a battery cell or battery housing (e.g., in an assembled or to-be-assembled state) or as a separate part independent of the battery cell or battery housing (but, e.g., for use with a battery cell provided separately). In one example, the cover is provided as part of a kit comprising the cover and one or both of a battery housing (e.g., as described below for the battery cell according to the present disclosure) and a plug for insertion into the injection hole (e.g., as described below for the battery cell according to the present disclosure).

Accordingly, the present disclosure also provides a battery cell comprising an electrode assembly and a battery housing configured to accommodate the electrode assembly through an open end formed at one side. The battery cell further comprises the cover according to the present disclosure (i.e., according to any one of the embodiments described herein) configured to cover the open end and a plug configured to be inserted into the injection hole and seal the injection hole. The flat portion of the cover is arranged to be spaced apart from the electrode assembly when the electrode coupling portions are coupled to the electrode assembly.

The battery cell may in particular be a cylindrical battery cell (e.g., with a cylindrical or substantially cylindrical shape). In other examples, the battery cell may, e.g., be a prismatic battery cell.

The electrode assembly is not particularly limited and may for example be embodied as known in the art, e.g., comprising a first electrode and a second electrode as well as, optionally, a separator interposed therebetween.

The electrode assembly may in particular be a wound electrode assembly (e.g., of the jelly-roll type), for example with the first and second electrodes (as well as, optionally, the separator interposed therebetween) being wound (e.g., rolled up) about a winding axis. The electrode assembly may have a winding center hole (e.g., an opening or void space) at its center (or, put differently, the first and second electrodes (as well as, optionally, the separator interposed therebetween) may be wound around the winding center hole, e.g., so as to extend around a circumference of the winding center hole). The winding center hole may extend through the electrode assembly (e.g., along the winding axis direction as defined below). The winding center hole may be filled by an electrolyte and/or a filler material or filler structure.

A lateral dimension (e.g., measured along the radial direction), for example a diameter or width, of the injection hole may be smaller than a (corresponding) lateral dimension (e.g., measured along the radial direction), for example a diameter and width, respectively, of the winding center hole. The lateral dimension of the injection hole may for example be greater than or equal to 30% and less than or equal to 95%, preferably greater than or equal to 50% and less than or equal to 80% and in one example greater than or equal to 60% and less than or equal to 70% of the lateral dimension of the winding center hole. Additionally or alternatively, the lateral dimension of the injection hole may be between 0.5 mm and 5 mm, in some examples between 1 mm and 2 mm smaller than the lateral dimension of the winding center hole.

The winding axis of the electrode assembly may define a winding axis direction (e.g., the direction along which the winding axis extends/about which the electrode assembly is wound). The winding axis may coincide with (e.g., be parallel to and, optionally, aligned with) the axial/normal direction of the cover and/or an axis (or vertical direction) of the battery housing (e.g., an axis (central/symmetry axis) of a cylindrical battery housing), for example as described below. In some examples, a cylindrical coordinate system may be used for describing the battery cell, wherein a radial direction may refer to a direction extending radially outwards relative to the winding axis direction and/or the axis of the battery housing (e.g., away from the winding axis or winding center hole and the axis of the battery housing, respectively) and a circumferential (or azimuthal) direction may refer to a direction (perpendicular to the winding axis direction/axis of the battery housing and the radial direction) extending (azimuthally) around the winding axis direction and the axis of the battery housing, respectively (e.g., around a circumference of the electrode assembly and the battery housing, respectively).

The battery housing (which may also be referred to as the battery case or casing) may be made of (e.g., comprise or consist of) a rigid material, in particular metal. The housing may have a cylindrical shape (i.e., be a cylindrical housing, e.g., a cylindrical can).

The battery housing has an open end at one side, for example an end (e.g., a wall) with an opening formed therein and/or a completely open end (e.g., with no wall being formed at the respective side of the battery housing such that the opening extends across the entire end/side of the battery housing). The open end may be formed such (e.g., sufficiently large) that the electrode assembly can be inserted into the battery housing through the open end (for arranging the electrode assembly within the battery housing). The open end (e.g., the opening therein) is to be covered by the cover of the battery cell.

In some examples, directions, orientations and similar geometric terms may be defined relative to the battery housing, in particular relative to the open end and/or the cover covering the open end. For example, the side of the housing at which the open end is formed and/or where the cover is arranged may be referred to as an upper or top side. A side of the housing opposite to the side at which the open end is formed and/or where the cover is arranged may be referred to as a lower or bottom side. Similarly, a side or surface of an object (e.g., element, structure or the like, for example the cover) facing in the same (or substantially the same) direction as the upper side of the housing may be referred to as an upper (or top) side and surface, respectively, of the respective object and a side or surface of the object facing in the same (or substantially the same) direction as the bottom side or surface of the housing may be referred to as a bottom (or lower) side and surface, respectively, of the respective object. A direction or axis from the lower side or surface of the housing to the upper side or surface of the housing may be referred to as a vertical direction and vertical axis (or axis of the housing), respectively, or vertically and a direction perpendicular to the vertical direction (e.g., parallel to the upper side of the housing) may be referred to as a horizontal direction or horizontally. It is, however, to be noted that these terms are not intended to imply any particular orientation or direction with respect to the direction of gravity or other entities (such as a device that the battery is used in) as this may depend on the orientation of the battery (and/or the device) in space, which may vary depending on use and state of the battery. Additionally or alternatively, a side or surface of an object (e.g., element, structure or the like, for example the cover) facing towards an inside of the battery housing may for example be referred to as an inner side and surface, respectively, of the respective object and a side or surface of an object facing towards an outside of the battery housing may be referred to as an outer side and surface, respectively, of the respective element. A direction towards an inside of the battery housing may be referred to as an inward direction or inwards and a direction towards an outside of the battery housing may be referred to as an outward direction or outwards.

The cover of the battery cell is configured to cover (e.g., close and/or seal), and in some examples covers (i.e., the battery cell may be in an assembled state or in a yet-to-be-assembled state), the open end of the battery housing (e.g., after arranging the electrode assembly therein), for example by coupling (e.g., welding or otherwise bonding and/or attaching) the edge portion of the cover to the battery housing. The cover may be configured to be arranged at the open end such that the electrode coupling portions of the cover are arranged on (e.g., in direct contact with) and, optionally, coupled (e.g., welded or otherwise bonded and/or attached) to the electrode assembly, for example to one or more electrode tabs on an (upper) surface, e.g., an upper end face, thereof (wherein the electrode tabs may, e.g., be integrally formed with an electrode of the electrode assembly).

The flat portion of the cover may be configured such that, when the electrode coupling portions of the cover are coupled to the electrode assembly, the flat portion is spaced apart (e.g., spatially separated by a gap) from the electrode assembly (e.g., the upper surface thereof on which the electrode coupling portions are arranged). Put differently, the electrode coupling portions of the cover are recessed from the flat portion such that when the electrode coupling portions are arranged on (the upper surface of) the electrode assembly, the flat portion does not come in contact with the electrode assembly (e.g., the upper surface and in particular the electrode tabs thereon). The recessed electrode coupling portions may act as a spacer keeping the flat portion away from the electrode assembly.

A separation distance between the flat portion (e.g., a bottom surface thereof facing the electrode assembly) and the electrode assembly (e.g., the upper surface thereof coupled/to be coupled to the electrode coupling portions) may be 1.0 mm or more and 3.0 mm or less, in some examples 1.5 mm or more and 2.5 mm or less, in some examples 1.7 mm or more and 2.3 mm or less. The separation distance may for example be 1.8 mm or more and 2.2 mm or less, in one example 1.9 mm or more and 2.1 mm or less. The separation distance may for example be measured along the winding axis direction (and/or along the axial direction of the cover and/or along the axis/vertical direction of the battery housing).

In some examples, the battery cell may further comprise a plug configured to be inserted into the injection hole in the cover and, optionally, seal the injection hole. The plug (e.g., an insert portion thereof as described below) may be configured to be inserted into the injection hole at least in part or in its entirety. The insertion hole may be configured to hold the plug, e.g., by means of a press fit, force-fit and/or shape-fit, in some examples by mechanically retaining means such as clips, clamps or the like. The plug (e.g., a coupling portion thereof as described below) may be configured to be coupled (e.g., welded and/or otherwise bonded or attached) to the cover (e.g., the flat portion and/or the plug coupling portion thereof). In some examples, the plug may be formed of a sheet of material (e.g., a sheet of uniform or substantially uniform thickness, e.g., varying by less than 50%, in some examples less than 30%, in one example by less than 20% across the entire plug), for example by drawing, bending and/or pressing. The plug may be made of metal.

The cover may comprise a plug coupling portion onto (e.g., into) which the plug is to be seated (and optionally inserted) and coupled, for example as described above for the cover according to the present disclosure. The plug coupling portion may have the injection hole formed therein (e.g., in the center thereof).

Put differently, in some examples, the cover/lead may further include a plug coupling portion into which the plug is inserted and seated and coupled, the plug coupling portion having the injection hole formed in the center.

In some examples, the electrode assembly may be wound around a winding center hole, e.g., as described above. The plug coupling portion (e.g., the seating portion thereof) may extend in a direction away from the injection hole (e.g., in the radial direction) to beyond an edge of the winding center hole (e.g., as seen along the vertical direction and/or the winding axis direction). The plug coupling portion may for example extend beyond the edge of the winding center hole by between 0.1 mm and 5 mm, in some examples by between 0.5 mm and 2.5 mm, in one example by between 1.0 mm and 1.5 mm (e.g., along the entire outer circumference of the plug coupling portion). Put differently, in some examples, an outer diameter of the plug coupling portion (e.g., of the seating portion thereof and/or a diameter at which the step between the plug coupling portion and the flat portion of the cover is formed) may be larger than an (inner) diameter of the winding center hole, e.g., by the aforementioned distance.

In some examples, the plug coupling portion may comprise an (e.g., annular) seating portion onto which the plug is to be seated. The seating portion may extend from the flat portion towards the injection hole. The seating portion may for example be embodied as described above for the cover according to the present disclosure.

Optionally, the plug coupling portion may further comprise a guide portion. The guide portion may, e.g., extend from the seating portion (axially and, optionally, radially) inwardly into the battery housing (e.g., along the axial direction of the cover and/or the axis/vertical direction of the battery housing). The guide portion may for example be embodied as described above for the cover according to the present disclosure.

The guide portion may define the inner periphery of the injection hole formed in the cover. The plug may be inserted (or to be inserted) into the guide portion. The plug (e.g., the insert portion thereof) may match an inner diameter of the injection hole so that the plug (e.g., the insert portion thereof) can be inserted into guide portion of the cover by force-fit or shape-fit or a combination thereof. For example, the insert portion of the plug may be coupled to the guide portion in a force-fitting manner. The injection hole may be formed inside the guide portion, and when the insert portion of the plug is inserted into the guide portion, the injection hole may be closed and, optionally, sealed.

In some examples, a distance by which the guide portion is spaced apart from the electrode assembly (when the electrode coupling portions of the cover are arranged on/coupled to the electrode assembly) may for example be between 0.1 mm and 3 mm, in some examples between 0.2 mm and 2 mm, in some examples between 0.3 mm and 1.0 mm, preferably between 0.4 mm and 0.8 mm, most preferably between 0.5 mm and 0.7 mm. Said distance may for example be the minimum distance between the guide portion and the electrode assembly (e.g., between the guide portion and an upper edge of the winding center hole). Said distance may for example be measured without the plug being inserted into the injection hole (e.g., prior to the plug being inserted into the injection hole).

A distance (e.g., as measured along the vertical direction of the battery housing, the winding axis direction of the electrode assembly and/or the axial direction of the cover) by which the flat potion (e.g., its upper surface and/or its lower surface) is spaced apart from the electrode assembly (e.g., its upper surface on/to which the electrode coupling portions are arranged/coupled) when the electrode coupling portions are arranged on/coupled to the electrode assembly may be larger than the respective distance (e.g., to the lower and upper surface, respectively, of the respective part) for the parts of the cover other than the flat portion and, optionally, the plug coupling portion (e.g., larger than the respective distance for at least the edge portion and, optionally, one or both of the vent portion and the bridges).

Additionally or alternatively, a distance (e.g., as measured along the vertical direction of the battery housing, the winding axis direction of the electrode assembly and/or the axial direction of the cover) by which the plug coupling potion (e.g., its upper surface and/or its lower surface) is spaced apart from the electrode assembly (e.g., its upper surface on/to which the electrode coupling portions are arranged/coupled) when the electrode coupling portions are arranged on/coupled to the electrode assembly may be larger than the respective distance (e.g., to the lower and upper surface, respectively, of the respective part) for the parts of the cover other than the plug coupling portion and, optionally, the flat portion (e.g., larger than the respective distance for at least the edge portion and, optionally, one or both of the vent portion and the bridges).

In other words, the flat portion and/or the plug coupling portion may be the parts of the cover that are arranged farthest away from the electrode assembly (e.g., in the vertical direction, the winding axis direction and/or the axial direction), e.g., arranged highest within the battery cell. Or, put differently, a distance between the plug coupling portion and the electrode assembly and/or a distance between the flat portion and the electrode assembly may be arranged to be spaced apart most in the winding axis direction than other parts of the cover/lead.

For one or both of the flat portion and the plug coupling portion, the distance (e.g., of its upper surface and/or its lower surface) to the electrode assembly may for example be at least 0.1 mm, in some examples at least 0.2 mm, in some examples at least 0.5 mm, in one example at least 1.0 mm and in one example at least 1.5 mm larger than the respective distance for some or all other parts of the cover (e.g., at least the edge portion and, optionally, one or both of the vent portion and the bridges). For one or both of the flat portion and the plug coupling portion, the distance (e.g., of its upper surface and/or its lower surface) to the electrode assembly may for example be at least between 0.1 mm and 2.5 mm, in some examples between 0.2 mm and 1.5 mm larger than the respective distance for some or all other parts of the cover (e.g., at least the edge portion and, optionally, one or both of the vent portion and the bridges).

In some examples, the plug may comprise an insert portion (which may also be referred to as a protrusion or protruding portion in some examples) configured to be inserted into at least a part of the injection hole (in some examples by means of a press fit, force fit and/or shape fit. Additionally or alternatively, the plug may comprise an (e.g., annular) coupling portion (which may also be referred to as flange portion, collar portion, extension portion or welding portion) configured to be coupled, in particular to be at least partially welded, to the cover (e.g., the plug coupling portion or seating portion thereof).

Put differently, in some examples, the plug may include an insert portion configured to be inserted into at least a part of the injection hole, and a welding portion configured to be at least partially welded to the cover/lead.

The coupling portion may surround the insert portion (e.g., extend radially outward from the extension portion). The coupling portion may be configured to be seated on the cover (e.g., on the plug coupling portion or seating portion thereof). The insert portion may be a central portion of the plug (e.g. be arranged at a center of the plug). The insert portion may protrude (e.g., extend or project) from the coupling portion (e.g., from a bottom surface thereof that is to be arranged on the cover, e.g., the plug coupling surface thereof), for example in the axial direction and/or the vertical direction, e.g., so as to extend into the injection hole when the coupling portion is seated on the cover. For example, the plug may have a trough- or T-shaped cross section (in the radial-axial plane, e.g., as viewed perpendicular to the vertical or axial directions) with the insert portion forming the vertical part and the coupling portion forming the horizontal part of the T/trough. The coupling portion and the insert portion may be integrally formed, in particular of a same sheet of material (e.g., by drawing).

In some examples, a step (e.g., in the axial direction) may be formed at an edge (e.g., abutting or adjacent to the edge) of the coupling portion of the plug (which may coincide/form an edge of the plug) facing away (e.g., radially outward) from the insert portion (e.g., an outer edge or circumference of the coupling portion), e.g., an edge adjacent to and, optionally, abutting the flat portion of the cover (e.g., the step formed between the plug coupling portion and the flat portion of the cover).

The step may extend along the edge (e.g., outer circumference) of the coupling portion, e.g., so as to completely surround the coupling portion. The step may be a single continuous step along the edge or may comprise a plurality of steps (e.g., recesses) arranged along the edge (and, e.g., spaced apart from each other.

The step may be formed on an upper surface of the plug/coupling portion that is to face away from the cover when the plug is inserted into the injection hole.

The step may form a recess (e.g., a cutout, indentation, bevel and/or chamfer) at the edge of the coupling portion (or, put differently, a recess may be formed at the edge of the coupling portion facing away from the insert portion). The recess may be configured to take up material (e.g., welding material and in particular a welding bead) when coupling (e.g., welding) the plug to the cover.

The step may have a height (e.g., corresponding to the depth of the recess) of between 0.02 mm and 1 mm, preferably between 0.04 mm and 0.4 mm, most preferably between 0.05 mm and 0.2 mm and in one example between 0.08 mm and 0.15 mm.

The step may be formed between a step portion at the edge of the coupling portion and the remainder of the coupling portion. The step portion may have a smaller thickness (e.g. material thickness) than the remainder of the coupling portion (and in some examples the remainder of the plug). For example, a thickness of the step portion may be between 0.02 mm and 1 mm, preferably between 0.04 mm and 0.4 mm, most preferably between 0.05 mm and 0.2 mm and in one example between 0.08 mm and 0.15 mm smaller than the thickness of the remainder of the coupling portion and/or the thickness of the remainder of the plug. Additionally or alternatively, the thickness of the step portion may be between 20% and 90%, in some examples between 50% and 80% and in one example between 60% and 75% of the thickness of the remainder of the coupling portion and/or the thickness of the remainder of the plug. The step portion may extend radially outward from the remainder of the coupling portion, e.g., between the step and the (outer) edge of the coupling portion.

The step may be arranged at a distance of between 0.05 mm and 2 mm, in some examples of between 0.1 mm and 1.0 mm, in one example of between 0.2 mm and 0.5 mm from the edge of the coupling portion. Additionally or alternatively, the recess and/or the step portion may have a radial extent (e.g., difference between inner and outer diameter) within the aforementioned ranges.

In some examples, the plug, when inserted into the injection hole, may protrude from the cover (e.g., a bottom surface thereof) towards the electrode assembly. For example, the insert portion of the plug may protrude from the coupling portion of the plug by more than a thickness (e.g., material thickness) of the plug coupling portion (e.g., seating portion) and/or of the flat portion of the cover. The plug (e.g., the bottom surface thereof) may protrude to a height (e.g., along the axial direction) between the electrode coupling portions (e.g., the upper surface thereof) and the flat portion (e.g., the bottom surface thereof) of the cover, in some examples to a height between the electrode coupling portions and some or all of the edge portion, the picking portion(s) and/or the bridge(s). The plug may for example protrude from the cover by between 0.1 mm and 2.0 mm, in some examples between 0.5 mm and 1.5 mm.

In some examples, a surface (e.g., a bottom surface) of the electrode coupling portions is face-to-face coupled with the electrode assembly, for example so as to be in contact with and in particular coupled (e.g., welded) to the electrode assembly over an extended area, preferably over the entire or substantially entire (e.g., at least 75%, preferably at least 90% and in one example at least 95% of the) respective surface of the respective electrode coupling portion.

In some examples, the electrode assembly may comprise a first electrode and a second electrode, as well as, optionally, a separator interposed therebetween, being wound around a winding axis so that a winding center hole extending in a winding axis direction is formed at a center.

Additionally or alternatively, the injection hole may be formed at a center of the cover.

Further additionally or alternatively, the flat portion may be arranged to be spaced apart from the electrode assembly in the winding axis direction when the electrode coupling portions are coupled to the electrode assembly.

Accordingly, a battery cell according to an embodiment of the present disclosure may include an electrode assembly in which a first electrode and a second electrode as well as a separator interposed therebetween are wound based on a winding axis so that a winding center hole extending in a winding axis direction is formed at a center, a battery housing configured to accommodate the electrode assembly through an open end formed at one side, a cover/lead configured to cover the open end and having an injection hole formed at a center, and a plug configured to be inserted into the injection hole and seal the injection hole, wherein the cover/lead may include a flat portion surrounding the injection hole, an edge portion formed at an edge so as to be coupled to the battery housing, and a plurality of electrode coupling portions coupled to the electrode assembly to be spaced apart from each other between the flat portion and the edge portion and respectively formed as an engraved depression, wherein the flat portion may be arranged to be spaced apart from the electrode assembly in the winding axis direction.

A separation distance in the winding axis direction between the flat portion and the electrode assembly may be 1.5 mm or more and 2.5 mm or less.

The cover/lead may further include a plug coupling portion into which the plug is inserted and seated and coupled, the plug coupling portion having the injection hole formed in the center.

The plug coupling portion and the flat portion may be portions in which a step is formed in a radial direction.

The plug coupling portion may be a portion that extends inwardly in the radial direction from the flat portion. The plug coupling portion may be formed to have a thinner thickness than the flat portion.

A thickness of the flat portion may be 0.55 mm or more and 0.65 mm or less. A difference between the thickness of the plug coupling portion and the thickness of the flat portion may be 0.25 mm or more and 0.35 mm or less.

A distance between the flat portion and the electrode assembly may be arranged to be spaced apart most in the winding axis direction than other parts of the cover/lead.

A distance between the plug coupling portion and the electrode assembly may be arranged to be spaced apart most in the winding axis direction than other parts of the cover/lead.

The plug may include an insert portion configured to be inserted into at least a part of the injection hole, and a welding portion configured to be at least partially welded to the cover/lead.

A bottom surface of the electrode coupling portion may be face-to-face coupled with the electrode assembly.

The electrode coupling portion may be provided in plurality.

For example, the electrode coupling portion may be provided in three pieces.

The cover/lead may further include at least one bridge extending in a radial direction from the flat portion and formed to partition two adjacent electrode coupling portions.

The plurality of the electrode coupling portions may be formed and arranged radially rotationally symmetrically with respect to the center of the cover/lead.

The flat portion may have a bent portion formed to be recessed toward the injection hole, and the electrode coupling portion may have an extension portion extended toward the bent portion.

The cover/lead may further include a bent notch portion formed between the electrode coupling portion and the edge portion.

The cover/lead may further include a picking portion arranged between two adjacent electrode coupling portions and the edge portion and forming a picking area.

In addition to the above, the battery cell according to any of the embodiments set forth above may comprise any feature or combination(s) of features described herein for the exemplary embodiments from the figures and/or for the cover according to the present disclosure (i.e., according to any one of the embodiments thereof described herein).

The cover and/or the battery cell according to the present disclosure may for example be used in a battery pack, a battery module and/or a vehicle, without, however, being limited to these applications.

Accordingly, there is also provided a battery pack or battery module, which may may include the battery cell according to the present disclosure (i.e., according to any embodiment thereof described herein) . The battery pack or module may further comprise a pack housing and a module housing, respectively, configured to accommodate (and in some examples accommodating) the battery cell. The battery pack or module may comprise a plurality of battery cells according to the present disclosure, which may, e.g., be arranged in an array within the pack/module housing.

There is further provided a vehicle, which may include the battery cell (e.g., a plurality of battery cells) according to the present disclosure (i.e., according to any embodiment thereof described herein). For example, the vehicle may include the battery pack or battery module according to the present disclosure (i.e., according to any embodiment thereof described herein), which may comprise one or more battery cells according to the present disclosure.

### Advantageous Effects

According to one aspect of the present disclosure, by designing the structure of a portion surrounding the injection hole of the cover, welding heat may be prevented from being directly transferred to the electrode assembly when welding the plug and the cover.

In addition or in the alternative, in the present disclosure, it may be possible to prevent thermal shock (e.g., loosening of the separator) occurring in the electrode assembly during welding of the plug and the cover and/or prevent physical damage (e.g., melting of the separator) to the electrode assembly.

In addition or in the alternative, in the present disclosure, by using a structure that is separated from the plug-cover welding portion by forging the portion surrounding the injection hole, it may be possible to prevent plug welding defects caused, e.g., by vaporization heat of the electrolyte around the injection hole.

In addition or in the alternative, in the present disclosure, it may be possible to provide a cover with improved welding quality to the electrode assembly by stably and evenly forming a flat surface with the electrode assembly.

In addition or in the alternative, in the present disclosure, it may be possible to provide a cover by which various dimensions such as weld flatness, weld length, and injection hole diameter may be aligned with the electrode assembly.

However, the effects that may be obtained through the present disclosure are not limited to the above, and other effects not mentioned herein may be clearly understood by those skilled in the art from the following disclosure.

### DESCRIPTION OF DRAWINGS

The accompanying drawings illustrate exemplary embodiments of the present disclosure and together with the foregoing disclosure, serve to provide further understanding of the technical features of the present disclosure. Thus, the present disclosure is not to be construed as being limited to the drawings.
FIG. 1 is a perspective view showing the appearance of a battery cell according to an embodiment of the present disclosure.
FIG. 2 is a cross-sectional view showing the battery cell of FIG. 1, taken along line A-A', in accordance with an embodiment of the present disclosure.
FIG. 3 is a plan view showing a cover according to an embodiment of the present disclosure.
FIG. 4 is a side cross-sectional view showing a C-C' cross-section of FIG. 3 in accordance with an embodiment of the present disclosure.
FIG. 5 is a side cross-sectional view showing a cross-section similar to FIG. 4 according to another embodiment of the present disclosure.
FIG. 6 is a cross-sectional drawing showing a cover according to another embodiment of the present disclosure.
FIG. 7 is a table showing the inner diameter of an injection hole, etc., compared to the winding center hole size of an electrode assembly according to an embodiment of the present disclosure.
FIG. 8 is a perspective drawing showing a cover according to another embodiment of the present disclosure.
FIG. 9 is a plan view showing a cover according to another embodiment of the present disclosure.
FIG. 10 is a side cross-sectional view showing a D-D' cross-section of FIG. 9 in accordance with an embodiment of the present disclosure.
FIG. 11 is a drawing showing a conventional detachable cover.
FIG. 12 is a table comparatively showing the vent pressure of the cover according to the present disclosure and the conventional detachable cover.
FIG. 13 is a drawing depicting a battery pack according to an embodiment of the present disclosure.
FIG. 14 is a drawing depicting a vehicle including the battery pack of FIG. 13.

### DETAILED DESCRIPTION OF EXAMPLES

Hereinafter, exemplary embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein provides examples for the purpose of illustrations only, not intended to limit the scope of the disclosure, so it should be understood that other equivalents and modifications could be made thereto without departing from the scope of the disclosure.

For convenience of explanation, in this specification, the direction along the length direction of the winding axis of the electrode assembly wound in the form of a jelly-roll is referred to as a winding axis direction. This direction may coincide with (e.g., be parallel to and, optionally, aligned with) an axial direction of the cover/lead and/or an axis/vertical direction of the battery housing as defined above. In addition, the direction surrounding the winding axis is referred to as a circumferential direction or a peripheral direction. In addition, the direction approaching the winding axis or moving away from the winding axis is referred to as a radial direction. Among them, the direction approaching the winding axis is referred to as a centripetal direction, and the direction moving away from the winding axis is referred to as a centrifugal direction.

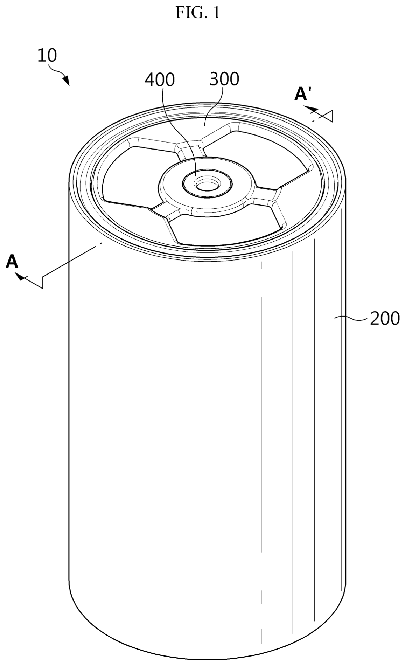

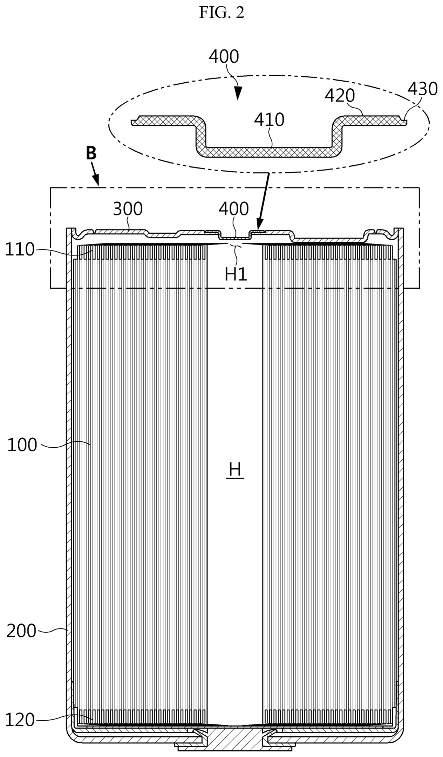

FIG. 1 is a perspective view showing the appearance of a battery cell 10 according to an embodiment of the present disclosure. FIG. 2 is a cross-sectional view showing the battery cell 10 of FIG. 1, taken along line A-A', in accordance with an embodiment of the present disclosure.

Referring to FIGS. 1 and 2, the battery cell 10 according to an embodiment of the present disclosure may include an electrode assembly 100, a battery housing 200, a cover 300 (which may also be referred to as lead herein), and a plug 400.

Referring to FIG. 2, the electrode assembly 100 may have a first uncoated portion 110 and a second uncoated portion 120. More specifically, the electrode assembly 100 may be in a jelly-roll shape in which the first electrode and the second electrode are wound around a winding axis, optionally with a separator interposed therebetween. Here, the first electrode and the second electrode may be formed in a sheet shape. An additional separator may be provided on an outer peripheral surface of the electrode assembly 100, e.g., for insulation from the battery housing 200. The structure of the electrode assembly 100 is not limited by the embodiment, and may have other structures, in particular winding structures such as any winding structure known in the art.

The first electrode may be a negative electrode plate and the second electrode may be a positive electrode plate (or vice-versa). The negative electrode plate may have a negative electrode active material applied to one or both surfaces thereof. A first uncoated portion 110 on which the negative electrode active material is not applied may be formed at an end of the negative electrode plate. The first uncoated portion 110 may be exposed to the outside of the separator while forming a plurality of winding turns based on the center of the electrode assembly 100. The first uncoated portion 110 may, e.g., be used as an electrode tab in itself. The positive electrode plate may have a positive electrode active material applied to one or both surfaces thereof. A second uncoated portion 120 on which the positive electrode active material is not applied may be formed at an end of the positive electrode plate. The second uncoated portion 120 may be exposed to the outside of the separator while forming a plurality of winding turns based on the center of the electrode assembly 100. The second uncoated portion 120 may, e.g., be used as an electrode tab in itself. That is, the positive electrode plate and the negative electrode plate may each include an uncoated portion on which an active material is not coated at a long side end in the winding direction. In addition, the first uncoated portion 110 and the second uncoated portion 120 may be configured to face in opposite directions. The first uncoated portion 110 may be accommodated inside the battery housing 200 so as to be positioned at one end in the winding axis direction (e.g., facing the open end of the battery housing 200 as detailed below), and the second uncoated portion 120 may be positioned at the other end in the winding axis direction (e.g., facing the opposite/bottom end of the battery housing 200). Here, the positive electrode active material coated on the positive electrode plate and the negative electrode active material coated on the negative electrode plate may be used without limitation, for example any active materials known in the art.

For example, one or both of the first uncoated portion 110 and the second uncoated portion 120 may have notches formed at a predetermined interval to form notching tabs, e.g., in the shape of a flag. In the jelly-roll type electrode assembly 100, the notching tabs may be bent in the radial direction and flattened. The notching tabs may be bent inwardly or outwardly in the radial direction. The notching tabs may be bent one by one during the process of forming the jelly-roll type electrode assembly 100, e.g., by winding the laminate. Alternatively, the notching tabs may be bent all at once after the jelly-roll type electrode assembly 100 is formed, e.g., by winding the laminate. The notching tabs of the first uncoated portion 110 and/or the notching tabs of the second uncoated portion 120, which are folded and overlapped in the radial direction, may provide a plane that is substantially perpendicular to the axial direction at each of the axial ends of the electrode assembly 100.

Referring to FIGS. 1 and 2, the battery housing 200 may be configured to accommodate the electrode assembly 100. The battery housing 200 may have an open end formed at one side. The battery housing 200 may be a generally cylindrical receiver having an open end formed at one side. For example, the electrode assembly 100 may be accommodated inside the battery housing 200 such that the first uncoated portion 110 faces the open end. Specifically, the battery housing 200 may include a sidewall portion, a bottom portion connected to one axial end of the sidewall portion, and an open end provided at the other axial end of the sidewall portion. The sidewall portion and the bottom portion of the battery housing 200 may be formed integrally. The bottom portion may have a generally flat shape. The sidewall portion may be cylindrical, connected to the bottom portion, and extending in the axial direction. The side of the sidewall portion that is not connected to the bottom portion may be defined as the open end of the battery housing 200. The open end may be formed at a portion facing (e.g., opposite to) the bottom portion of the battery housing 200. Accordingly, the electrode assembly 100 may be accommodated through the open end formed in the battery housing 200.

A conventional battery housing sometimes further includes a beading portion formed at an end adjacent to the open end and a crimping portion formed on the beading portion. However, the battery housing 200 of the present disclosure may not have any beading crimping structure (e.g., a beading and/or crimping structure) or at least not a beading crimping structure formed on the sidewall portion. That is, the sidewall portion of the battery housing 200 of the present disclosure may for example not be recessed inward. That is, the battery housing 200 of the present disclosure may for example be configured to have a constant radius or width over the entire area of the sidewall portion (e.g., along the entire length of the sidewall portion along the axial/winding direction).

According to this structure, by excluding the beading crimping structure in the cylindrical battery cell 10, various process errors that may occur due to the beading crimping structure may be prevented. In addition, process simplification may be achieved by omitting the beading and crimping processes. Moreover, since the beading crimping structure is not formed, it may be possible to prevent the phenomenon in which the dead space within the battery increases in the winding axis direction of the electrode assembly 100 and the energy density decreases. Therefore, the battery cell 10 according to the present disclosure may increase the internal capacity more than the battery cell using the beading and crimping methods with the same external shape. That is, the energy density of the battery cell 10 may be improved according to the structure of the present disclosure.

The battery housing 200 may include a conductive material, in particular a conductive metal material. The material of the battery housing 200 may include a conductive metal, such as aluminum, steel, or stainless steel. For example, the bottom portion and the sidewall portion may be manufactured by forming a metal sheet (e.g., a metal sheet having nickel plated on the surface of steel) using a deep drawing process. The front end of the sidewall portion may be trimmed with a punch, e.g., while holding it with a blank holder. However, the material and manufacturing method of the battery housing 200 are not limited thereto.

Referring to FIGS. 1 and 2, the cover (lead) 300 may be configured to cover the open end formed at one side of the battery housing 200. The cover 300 may be configured to have, for example, an approximate plate shape. The cover 300 may be coupled to the open end of the battery housing 200. According to one embodiment, as shown in FIG. 2, the cover 300 may be in contact with an inner surface of an upper edge of the open end of the battery housing 200. According to another embodiment, although not illustrated in the drawings, the cover 300 may be seated on an upper edge of the open end of the battery housing 200.

The contact point of the open end of the battery housing 200 and the cover 300 may be coupled. For example, the coupling point between the open end of the battery housing 200 and the cover 300 may be coupled by welding. For example, the cover 300 may be coupled to the battery housing 200 using butt welding. Therefore, the battery cell 10 may have a larger internal capacity with the same external shape than a battery cell using the beading and crimping methods. Therefore, the energy density of the battery cell 10 may be increased. However, the battery housing 200 and the cover 300 may be coupled by joining other than welding, and the coupling manner is not limited thereto. By coupling the battery housing 200 and the cover 300, the battery cell 10 may be guaranteed to be sealed.

The cover 300 may be made of (e.g., comprise or consist of) a metal material. Therefore, the cover 300 may have conductivity. For example, the cover 300 may include an aluminum material. The cover 300 may be electrically connected to battery housing 200. Meanwhile, since the battery housing 200 is also made of a metal having conductivity, the cover 300 coupled to the battery housing 200 may also be configured to have the same polarity as the battery housing 200.

The thickness of cover 300 may be approximately 0.5 mm or more and 2 mm or less. For example, the thickness of cover 300 may be approximately 1 mm. However, the thickness of cover 300 may not be constant and may not be limited by this embodiment.

The cover 300 may have an injection hole H1 formed in at least a part of the cover. The injection hole H1 may be formed in the center of the cover 300. At this time, the injection hole H1 may be blocked by a plug 400, explained later. For example, the plug 400 may be press-fitted into the injection hole H1. Since the injection hole H1 is blocked by the plug 400, the battery cell 10 may secure hermetical sealing. Also, the plug 400 may additionally or alternatively seal the injection hole H1 by welding.

The injection hole H1 may serve as an electrolyte injection port, for example. The center of the injection hole H1 may coincide with the center of the winding center hole H of the electrode assembly 100. That is, in the winding axis direction, the injection hole H1 of the cover 300 may be located above (and optionally centered relative to) the winding center hole H of the electrode assembly 100 (e.g., such that the winding axis extends through the injection hole H1).

Meanwhile, the injection hole H1 may be configured to discharge gas generated during the pre-charge process, explained later. That is, after a degassing process in which all gases generated during the pre-charge process are discharged through the injection hole H1, the plug 400 may be configured to be coupled into the injection hole H1. Accordingly, the swelling phenomenon of the battery cell 10 may be reduced.

Referring to FIGS. 1 and 2, the plug 400 may be configured to seal the injection hole H1. That is, the plug 400 may be configured to be inserted into the injection hole H1. The plug 400 may penetrate the injection hole H1 (e.g., so as to protrude from a side of the cover 300 facing (or to face) the electrode assembly 100). By inserting the plug 400 into the injection hole H1 of the cover 300, the sealing of the battery cell 10 may be secured. The plug 400 may penetrate the injection hole H1 formed in the cover 300 to seal the exterior and interior of the battery housing 200 and prevent leakage of the electrolyte.

With this structure, the beading and crimping processes may be omitted, thereby achieving process simplification. Moreover, it is possible to prevent the phenomenon in which the dead space within the battery increases in the winding axis direction of the electrode assembly 100 due to the beading and crimping structure and thus lowers the energy density. That is, according to the structure of the present disclosure, the energy density of the battery cell 10 may be improved.

As shown in FIG. 2, the plug 400 may include an insert portion 410 configured to be inserted into at least a part of the injection hole H1. The plug 400 may further include a coupling portion (e.g., welding portion) 420 configured to be mutually coupled (e.g., welded) with at least a part of the cover 300. For example, the diameter (e.g., outer diameter) of the insert portion 410 of the plug 400 may be approximately 3 mm or more and 7 mm or less. For example, the diameter of the insert portion 410 of the plug 400 may be approximately 5 mm or more and 5.50 mm or less. By having the insert portion 410, the plug 400 may be maintained in a state of being press-fitted and fixed into the injection hole H1 even before welding. The plug 400 may thus be prevented from being detached from the injection hole H1, e.g., while being transferred to a welding device. For example, the diameter (e.g., outer diameter) of the coupling/welding portion 420 of the plug 400 may be approximately 6 mm or more and 12 mm or less. For example, the diameter of the welding portion 420 of the plug 400 may be approximately 9 mm or more and 9.5 mm or less. For example, the thickness of the plug 400 (e.g., a total physical dimension or extent of the plug 400) in the winding axis direction may be 0.8 mm or more and 3 mm or less. For example, the thickness of the plug 400 (e.g., the total physical dimension or extent of the plug 400) in the winding axis direction may be 1.50 mm or more and 1.70 mm or less. For example, the thickness of the plug 400 (e.g., a material thickness of a material of the plug 400, e.g., of a sheet that the plug is formed of) may be 0.1 mm or more and 0.5 mm or less (e.g., in the winding axis direction). For example, the thickness of the plug 400 (e.g., the material thickness of the material of the plug 400) may be 0.3 mm.

According to one embodiment, the edge (e.g., edge portion) of the coupling/welding portion 420 of the plug 400 may have a step (e.g., a step/step portion 430 may be formed at the edge of the coupling/welding portion 420). For example, the step portion 430 formed on the edge portion of the coupling/welding portion 420 of the plug 400 may have a thinner thickness than the remaining portion. For example, the thickness of the step portion 430 of the plug 400 may be 0.05 mm or more and 0.3 mm or less. For example, the thickness of the step portion 430 of the plug 400 may be 0.2 mm. According to the embodiment of the present disclosure, when welding the coupling/welding portion 420, the welding bead may be accommodated in the space where the step is formed, and the welding bead may not protrude from the surface, thereby ensuring flatness.

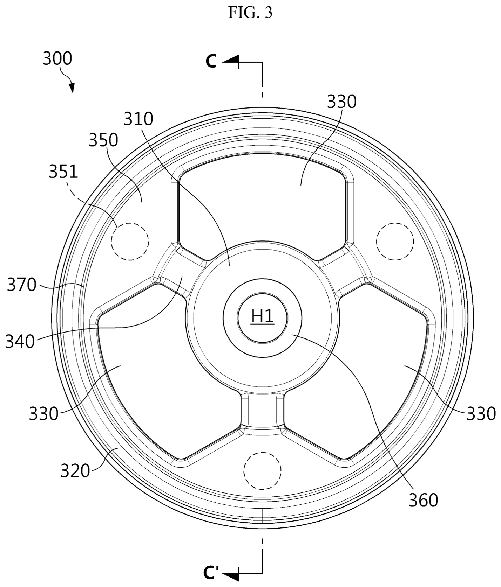

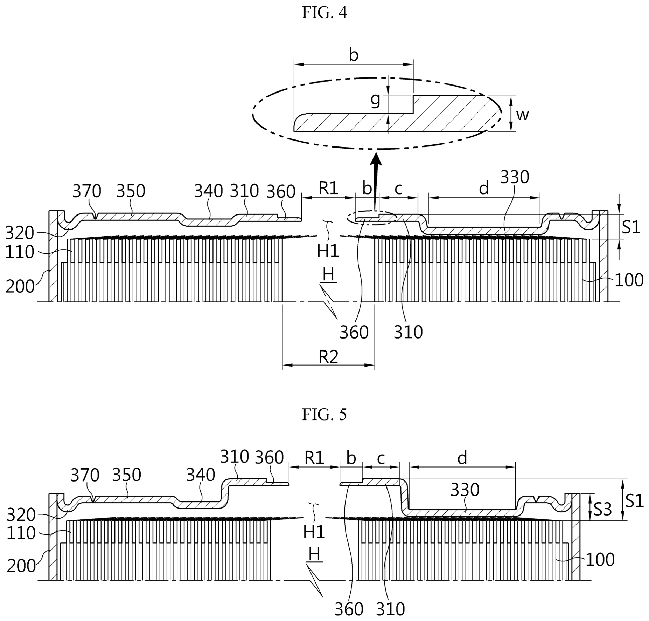

FIG. 3 is a plan view showing a cover (lead) according to an embodiment of the present disclosure. FIG. 4 is a side cross-sectional view showing a C-C' cross-section of FIG. 3 in accordance with an embodiment of the present disclosure.

The injection hole H1 may be configured to allow an electrolyte to be injected. The injection hole H1 may be a hole into which the electrolyte is injected. Additionally or alternatively, the injection hole H1 may also be a hole through which a welding rod passes. For example, in the battery cell 10, a current collection plate (e.g., a positive electrode current collection plate) and a rivet-shaped terminal may be arranged on the opposite side of the injection hole H1 (e.g., at the end of the housing 200 opposite to its open end/the cover 300). A welding rod for welding and coupling the current collection plate and the terminal may be inserted through the injection hole H1 into the winding center hole H of the electrode assembly 100. The injection hole H1 may be located at or approximately at the center of the cover 300.

According to one embodiment, the size of the injection hole H1 may be smaller than the size of the winding center hole H of the electrode assembly 100. The inner diameter R1 of the injection hole H1 may be larger than the diameter of the welding electrode in order to avoid interference of the welding electrode. In addition or in the alternative, the inner diameter R1 of the injection hole H1 may be smaller than the inner diameter R2 of the winding center hole H of the electrode assembly 100, for example in order to ensure stable injection of electrolyte, etc.

According to another embodiment, the size of the injection hole H1 may be larger than the size of the winding center hole H of the electrode assembly 100. In this case, the electrolyte permeability may be improved.

For example, the inner diameter R1 of the injection hole H1 may be approximately 2 mm or more and 7 mm or less. For example, the inner diameter of the injection hole H1 may be approximately 5 mm or more and 5.5 mm or less.

The diameter of the insert portion 410 of the plug 400 may be smaller than the inner diameter R1 of the injection hole H1. The diameter of the welding portion 420 may be larger than the inner diameter R1 of the injection hole H1.

According to this structure, when the plug 400 is pressed into the injection hole H1, the plug 400 moves downward. At this time, the electrode assembly 100, etc., may be prevented from being damaged by the plug 400 that has moved downward. That is, even if the plug 400 is pressed downward, since the plug 400 enters the inside of the winding center hole H of the electrode assembly 100, the folded surface or electrode tab of the electrode assembly 100 may not be affected.

Referring to FIGS. 3 and 4, the cover 300 according to an embodiment of the present disclosure may further include a flat portion 310, an edge portion 320, and a plurality of electrode coupling portions 330.

The flat portion 310 may surround the injection hole H1. The flat portion 310 may surround the injection hole H1 along a roughly circumferential direction. The flat portion 310 may be provided in a shape in which at least a portion is flat (e.g., extending perpendicular to the winding axis direction).

Meanwhile, the length (c) of the flat portion 310 may be formed appropriately to secure stable flatness. For example, the length (c) may be 2 mm or more, preferably 3 mm or more, in one example 4 mm or more. If the length (c) is less than 3 mm and or even less than 2 mm, forming of the flat portion 310 may be difficult.

The flat portion 310 and the electrode assembly 100 may be arranged to be spaced apart from each other in the winding axis direction. That is, the flat portion 310 may be arranged higher in the winding axis direction than the electrode coupling portion 330. For example, the separation distance (S1) in the winding axis direction between the flat portion 310 and the electrode assembly 100 may be 1.0 mm or more and 3.0 mm or less, in some example (e.g., about) 1.5 mm or more and 2.5 mm or less and in some examples 1.75 mm or more and 2.25 mm or less. For example, the separation distance (S1) between the flat portion 310 and the electrode assembly 100 may be about 2 mm. According to the embodiment of the present disclosure, since the height in the winding axis direction of the flat portion 310 adjacent to the coupling/welding portion of the cover 300 and the plug 400 is high, welding heat may be blocked from being directly transferred to the electrode assembly 100. Therefore, damage such as loosening of the separator of the electrode assembly 100 or melting of the separator of the electrode assembly 100 due to thermal or physical shock caused by welding heat may be prevented.

The edge portion 320 may be formed at the edge of the cover 300 so as to be coupled to the battery housing 200. The edge portion 320 may be coupled to an open end formed at one side of the battery housing 200 by a press-fitting method. The edge portion 320 may be coupled to the battery housing 200 by being press-fitted to one side of the battery housing 200 and then welding. A cross section of the edge portion 320 may be approximately U-shaped. An end of the edge portion 320 close to the electrode assembly 100 may be spaced apart from the electrode assembly 100.

The electrode coupling portion 330 may be coupled with the electrode assembly 100. The electrode coupling portion 330 may be coupled with the electrode assembly 100 by welding. The bottom surface (the surface facing the electrode assembly 100) of the electrode coupling portion 330 may be coupled face-to-face with the electrode assembly 100 (e.g., so as to be coupled with the electrode assembly 100 across the entire bottom surface). The bottom surface of the electrode coupling portion 330 may be coupled with the first uncoated portion 110 (foil tab) of the electrode assembly 100.

The electrode coupling portion 330 may be arranged between the flat portion 310 and the edge portion 320. That is, the flat portion 310, the electrode coupling portion 330, and the edge portion 320 may be arranged sequentially along the radial direction (e.g., the flat portion 310 around a center of the cover 300, the electrode coupling portion 330 around the flat portion 310 and the edge portion 320 around the electrode coupling portion 330). The electrode coupling portion 330 may be provided in plurality (i.e., as a plurality of electrode coupling portions 330). The plurality of electrode coupling portions 330 may be arranged to be spaced apart from each other (e.g., equidistantly). For example, the plurality of electrode coupling portions 330 may be arranged to be spaced apart from each other in the circumferential direction.

The plurality of electrode coupling portions 330 may be formed to be recessed as an engraved depression (or, put differently, the electrode coupling portions 330 may be formed as a depression that is recessed from the flat portion 310). Specifically, the electrode coupling portions 330 may be formed to be recessed toward the electrode assembly 100 (e.g., in a direction toward a surface of the cover 300 that is to face the electrode assembly 100). The bottom surface of the electrode coupling portion 330 may be provided closest to the electrode assembly 100 than the remaining bottom surface of the cover 300 (e.g., protruding furthest from the bottom surface of the cover 300). In this case, when the electrode coupling portion 330 is coupled with the electrode assembly 100, the remaining portion of the cover 300 excluding the electrode coupling portion 330 may be spaced apart from the electrode assembly 100.

The cover 300 according to an embodiment of the present disclosure may be formed to be recessed as an engraved depression as the plurality of electrode coupling portions 330 are spaced apart from each other (for example, a plurality of electrode coupling portions 330 that are spaced apart from each other may be formed, each as a depression recessed from the flat portion 310). Thereby, a flat surface with the electrode assembly 100 may be formed more stably. The cover 300 according to an embodiment of the present disclosure may improve welding quality with the electrode assembly 100.

Meanwhile, since the cover 300 according to the present disclosure may be coupled to the battery housing 200 to cover the open end of the battery housing 200 and, in some examples, at the same time may be electrically connected to the electrode assembly 100, a separate current collection plate, such as a negative electrode current collection plate, may not be provided. That is, the cover 300 according to the present disclosure may be provided as a so-called integrated cover 300 that may also perform the function of a current collection plate (e.g., a monolithic (e.g., integrally formed) structure functioning both as a cover and a current collector without a separate current collection plate being provide in addition).

The electrode coupling portion 330 may extend toward the flat portion 310 and the edge portion 320. Specifically, the electrode coupling portion 330 may extend centripetally toward the flat portion 310, and the electrode coupling portion 330 may extend radially (e.g., centrifugally) toward the edge portion 320. In this case, since the length (d) (e.g., radial extent), which is a welding length (LFW, Lid Foil tab welding) between the electrode coupling portion 330 and the first uncoated portion 110 (foil tab), may be secured long, the internal resistance of the battery cell may be reduced. For example, the maximum length (d) in the radial direction of the electrode coupling portion 330 may be approximately 3 mm or more and 20 mm or less, preferably 6 mm or more and 15 mm or less, in some examples 9 mm or more and 12 mm or less. For example, the maximum length (d) in the radial direction of the electrode coupling portion 330 may be approximately 12 mm. For example, the maximum length (d) in the radial direction of the electrode coupling portion 330 may be approximately 9 mm.

The electrode coupling portion 330 may be provided in three pieces (e.g., three electrode coupling portions 330 may be provided). When the electrode coupling portion 330 is provided in three pieces, the plurality of electrode coupling portions 330 may easily form a single plane, so that a stable flatness with the electrode assembly 100 may be more easily secured (e.g., without overconstraining the coupling by providing too many contact points).

The cover 300 according to an embodiment of the present disclosure may further include at least one bridge 340. The bridge 340 may be provided in plurality (i.e., as a plurality of bridges), for example, in three pieces (i.e., three bridges 340). The bridge 340 may extend in a radial direction from the flat portion 310 (e.g., centripetally). The bridge 340 may be formed to partition two adjacent electrode coupling portions 330 (e.g., be arranged between two adjacent electrode coupling portions 330). The bridge 340 may extend from the flat portion 310 toward the edge portion 320. Alternatively, the bridge 340 may extend from the flat portion 310 toward the picking portion 350, explained later.

By the bridge 340, the plurality of electrode coupling portions 330 may be more reliably partitioned and separated. The bridge 340 may reinforce the rigidity of the cover 300.

Meanwhile, the upper surface of the bridge 340 (e.g., facing away or being to face away from the electrode assembly) may be formed at a height higher than the upper surface of the electrode coupling portion 330, but lower than the upper surface of the flat portion 310 (i.e., at a height between the upper surface of the electrode coupling portion 330 and the upper surface of the flat portion 310). If the bridge 340 is formed in this manner, the rigidity of the cover 300 may be further strengthened.

A width of the bridge 340 in a direction between the two adjacent electrode coupling portion partitioned thereby (e.g., along the circumferential direction) may be smaller than an outer diameter of the plug coupling portion 360 and, optionally, also smaller than a diameter of the injection hole H1.

The plurality of electrode coupling portions 330 may be formed and arranged radially rotationally symmetrically with respect to the center of the cover 300 (e.g., spaced apart equidistantly). The electrode coupling portions 330 may be formed in the same shape and arranged to form an equiangular angle (e.g., 120 degrees) with respect to the cover 300. If the plurality of electrode coupling portions 330 are formed and arranged symmetrically in this way, stable flatness between the cover 300 and the electrode assembly 100 may be more easily secured, and the electrical stability of the battery cell may also be improved.

Referring to FIG. 4, the cover 300 according to an embodiment of the present disclosure may further include a plug coupling portion 360. The plug 400 may be inserted, seated and coupled into the plug coupling portion 360. An injection hole H1 may be formed at the center of the plug coupling portion 360. The plug 400 may be configured to seal the injection hole H1. The plug coupling portion 360 may be a portion extending inwardly from the flat portion 310 in the radial direction. The plug coupling portion 360 may be formed to have a thinner thickness than the flat portion 310. That is, the plug coupling portion 360 and the flat portion 310 may be portions in which a step is formed in the radial direction (or, put differently, a surface of the plug coupling portion 360 facing away (or being to face away) from the electrode assembly 100 may be recessed from the flat portion 310 in the direction of the electrode assembly 100). The step may be formed by forging (e.g., by pressing such as impact pressing or stamping). For example, the thickness (w) of the flat portion 310 may be 0.50 mm or more and 0.70 mm or less, in some examples (e.g., approximately) 0.55 mm or more and 0.65 mm or less, in one example 0.58 mm or more and 0.62 mm or less. Additionally or alternatively, the difference (g) between the thickness of the plug coupling portion 360 and the thickness of the flat portion 310 may be 0.20 mm or more and 0.40 mm or less, in some examples (e.g., approximately) 0.25 mm or more and 0.35 mm or less, in one example 0.28 mm or more and 0.32 mm or less. For example, the thickness (w) of the flat portion 310 may be approximately 0.6 mm, and/or the difference (g) between the thickness of the plug coupling portion 360 and the thickness of the flat portion 310 may be 0.3 mm. According to the embodiment of the present disclosure, a structure on which the coupling/welding portion 420 of the plug 400 may be seated may be formed by forging (e.g., pressing) the area around the injection hole H1. In addition, by forming the coupling/welding portion 420 to be spaced apart from the injection hole H1, welding defects of the plug 400 caused by vaporization heat of electrolyte around the injection hole may be prevented.

Meanwhile, as the length (e.g., radial extent) (b) of the plug coupling portion 360 formed from the injection hole H1 to the end of the flat portion 310 increases, the weldability of the welding portion 420 of the plug 400 and the seating portion 361 may be improved. This is because the distance from the injection hole H1 to the welding position becomes longer, thereby preventing a problem of welding quality deterioration due to the electrolyte. The length (b) may be designed to prevent welding defects of the plug 400 due to vaporization heat of the electrolyte. For example, the length (b) in the radial direction of the plug coupling portion 360 may be 0.5 mm or more and 4 mm or less, in some examples 1 mm or more and 3 mm or less, in one example 1.5 mm or more and 2.5 mm or less. For example, the length (b) in the radial direction of the plug coupling portion 360 may be 2 mm.

If the cover 300 further includes a plug coupling portion 360 as above, the coupling property between the plug 400 and the cover 300 is improved, and the injection hole H1 may be effectively sealed.

The cover 300 according to the present disclosure may further include a picking portion 350. The picking portion 350 may be arranged between two adjacent electrode coupling portions 330 and the edge portions 320. A picking area 351 may be formed in the picking portion 350. The picking area 351 may be picked by a picking device. The diameter of the picking area 351 may be formed to be, for example, about 4 mm.

In the case where the cover 300 according to the present disclosure is equipped with the picking portion 350, the picking equipment may not come into contact with the electrode coupling portion 330, and thus foreign substances, etc. may be prevented from entering the electrode coupling portion 330 from the picking equipment, etc., and the cover 300 may be stably held and transported during the battery cell assembly process.

The cover 300 according to the present disclosure may further include a vent portion 370. The vent portion 370 may be formed between the electrode coupling portion 330 and the edge portion 320. The vent portion 370 may be ruptured by the internal pressure of the high-temperature venting gas when a thermal event occurs in the battery cell 10, thereby allowing the venting gas to be discharged to the outside from the battery cell 10. The vent portion 370 may for example comprise a predetermined breaking line or area (e.g., a structurally weakened portion of the cover 300 such as a line or area of reduced thickness, for example in the form of a notch), wherein the predetermined breaking line/area may be configured to break (e.g., rupture and/or deform) when the internal pressure within the battery housing 200 exceeds a preset value.

FIG. 5 is a side cross-sectional view showing a cross-section according to another embodiment of the present disclosure.

According to one embodiment, the distance (S1) between the flat portion 310 and the electrode assembly 100 (e.g., as measured along the winding axis direction) is configured to be longer compared to FIG. 4.

The flat portion 310 and the electrode assembly 100 may be arranged to be spaced apart from each other in the winding axis direction. The distance (S1) between the flat portion 310 and the electrode assembly 100 may be arranged to be spaced apart most from each other in the winding axis direction compared to other portions of the cover 300 (or, put differently, a distance by which the flat portion 310 protrudes above/is spaced apart from the electrode assembly 100 may be larger than the respective distance for the other parts of the cover 300 other than the flat portion 310 and, if present, the plug coupling portion 360). That is, the height of the flat portion 310 in the winding axis direction may be highest compared to other portions of the cover 300. For example, the separation distance (S1) between the flat portion 310 and the electrode assembly 100 may be longer than the separation distance (S3) between the upper surface of the edge portion 320, which is formed relatively high among other portions of the cover 300, and the electrode assembly 100. Similarly, the separation distance between the plug coupling portion 360, which extends in the radial direction from the flat portion 310, and the electrode assembly 100 may be arranged to be spaced apart most from each other in the winding axis direction compared to other portions of the cover 300 (e.g., at the same separation distance as the flat portion 310). According to the embodiment of the present disclosure, since the height in the winding axis direction of the flat portion 310 adjacent to the welding portion of the cover 300 and the plug 400 is formed high, the welding heat during welding of the cover 300 and the plug 400 may be blocked from being directly transferred to the electrode assembly 100. Accordingly, physical damage, such as melting of the separator of the electrode assembly 100 due to the welding heat, may be prevented.

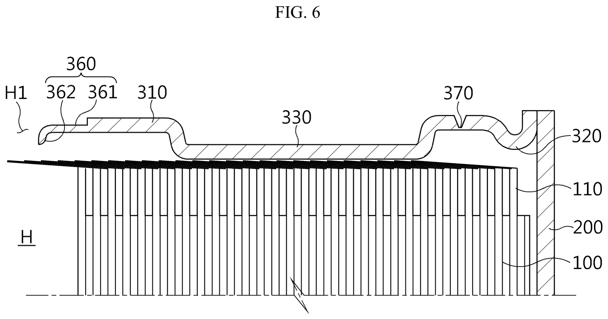

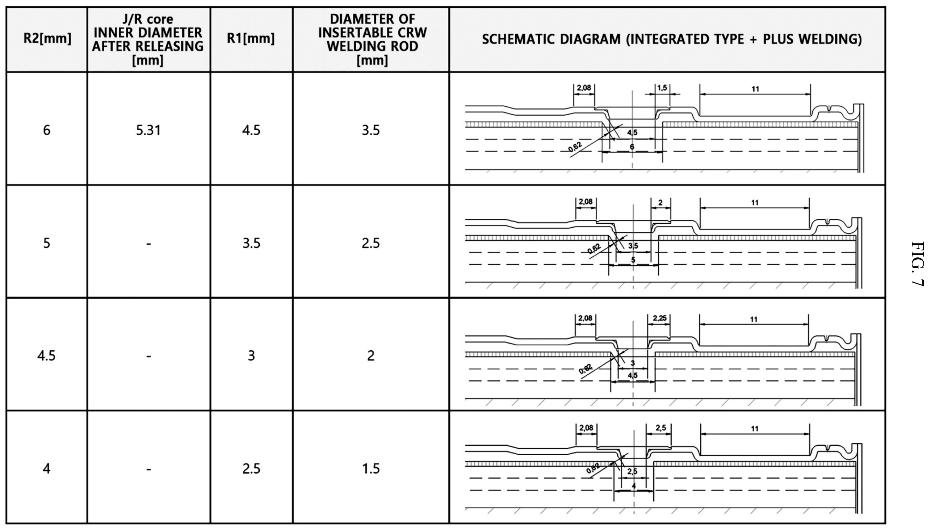

FIG. 6 is a cross-sectional drawing showing a cover (lead) according to another embodiment of the present disclosure. FIG. 7 is a table showing the inner diameter of an injection hole, etc., compared to the winding center hole size of an electrode assembly according to an embodiment of the present disclosure.

Referring to FIG. 6, the plug coupling portion 360 of the cover 300 according to another embodiment of the present disclosure may include a guide portion 362 and a seating portion 361. The seating portion 361 may be a portion extending inwardly in the radial direction from the flat portion 310. The seating portion 361 may be formed to have a thinner thickness than the flat portion 310 (e.g., so as to be recessed from the upper surface therefrom in the direction of the electrode assembly 100). That is, the seating portion 361 and the flat portion 310 may be portions in which a step is formed in the radial direction. A plug 400 may be seated on the seating portion 361. The plug 400 may include a coupling/welding portion 420 to be seated on the seating portion 361.

The guide portion 362 may be a portion extending inwardly from the seating portion 361 into the battery housing 200 (e.g., in the winding axis direction). At least a part of the guide portion 362 may be inclined at a specified angle from the seating portion 361. The plug 400 may be inserted into the guide portion 362. The plug 400 may have an insert portion 410 formed to be inserted along the guide portion 362. The insert portion 410 may be coupled to the guide portion 362 in a press-fitting manner. An injection hole H1 may be formed at the inside of the guide portion 362 (e.g., the guide portion 362 may border the injection hole H1). When the insert portion 410 is inserted into the guide portion 362 along the guide portion 362, the injection hole H1 may be sealed. The coupling/welding portion 420 may be a shape extending in a radial direction from the insert portion.

FIG. 7 exemplarily shows the inner diameter of the electrode assembly 100 (e.g., after being released) according to the inner diameter R2 of each winding center hole H, the inner diameter R1 of the injection hole H1, and the diameter of the welding rod that can be inserted into the injection hole H1. In this way, the inner diameter R1 of the injection hole H1 may be designed in consideration of the diameter of the welding rod and the process margin.

According to one embodiment, the inner diameter R1 of the injection hole H1 may be approximately 2 mm or more and 7 mm or less. For example, when the inner diameter R2 of the winding center hole H is 4 mm or more and 8 mm or less, the inner diameter R1 of the injection hole H1 may be 2.5 mm or more and 6.5 mm or less. For example, when the inner diameter R2 of the winding center hole H is 6 mm, the inner diameter R1 of the injection hole H1 may be 4.5 mm.

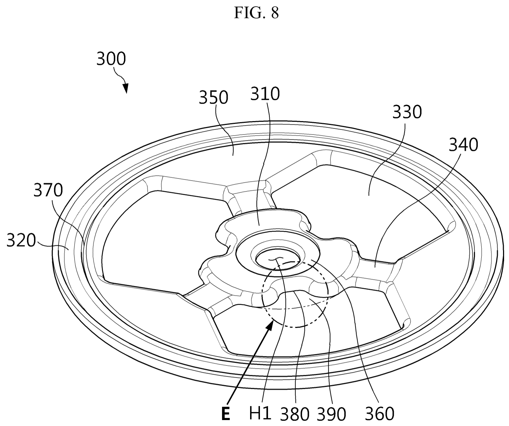

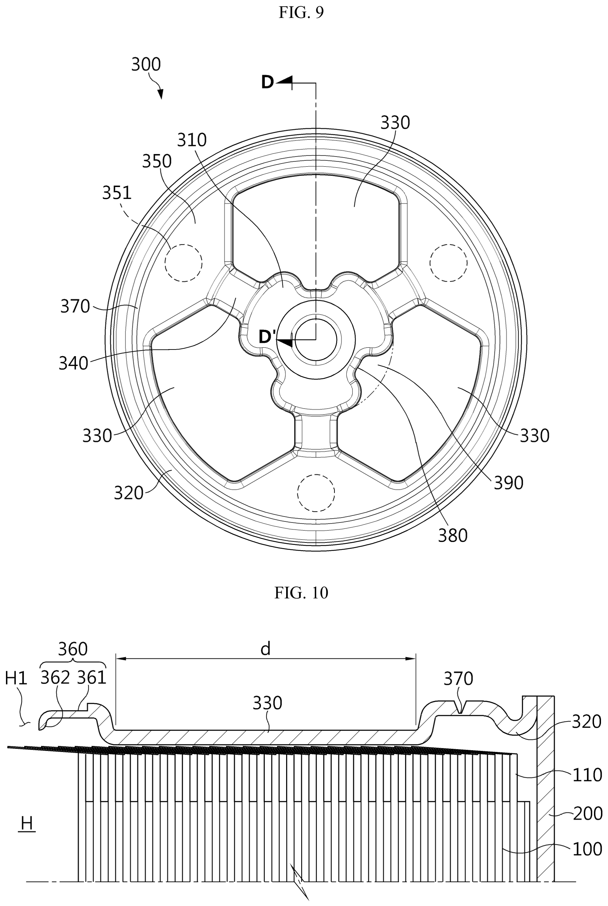

FIG. 8 is a perspective drawing showing a cover (lead) 300 according to another embodiment of the present disclosure, FIG. 9 is a plan view showing a cover (lead) 300 according to another embodiment of the present disclosure, and FIG. 10 is a side cross-sectional view showing a D-D' cross-section of FIG. 9 in accordance with an embodiment of the present disclosure.

Referring to FIGS. 8 to 10, the cover 300 according to another embodiment of the present disclosure may include a bent portion 380 (e.g., as an example of a concave portion). The electrode coupling portion 330 may include an extension portion 390.

Referring to a portion indicated as E in FIG. 8, the bent portion 380 may be formed to be recessed toward the injection hole H1 from the flat portion 310. The extension portion 390 may be formed to extend toward the bent portion 380. The extension portion 390 may be further extended toward the injection hole H1 as much as the bent portion 380 is recessed.

If the flat portion 310 and the electrode coupling portion 330 are provided with the bent portion 380 and the extension portion 390 as above, respectively, the length (e.g., radial extent) (d), which is the welding length between the electrode coupling portion 330 and the electrode assembly 100, may be further increased, so that the internal resistance of the battery cell 10 may be further reduced. For example, referring to FIG. 5, if the cover 300 does not have the bent portion 380 and the extension portion 390, like the cover 300 according to an embodiment of the present disclosure, the length (d) may be about 9 mm. For example, referring to FIG. 8, if the cover 300 has the bent portion 380 and the extension portion 390, like the cover 300 according to another embodiment of the present disclosure, the length (d) may be longer (e.g., between 1 mm and 6 mm longer, in some examples between 2 mm and 4 mm longer), for example about 12 mm.

In addition, the length (e.g., radial extent) (c) of the remaining portion of the flat portion 310 excluding the bent portion 380 may be easily secured. In addition, the inner diameter R1 of the injection hole H1 and/or the length (e.g., radial extent) (b) of the plug coupling portion 360 may be easily secured. In addition, the rigidity of the cover 300 may be further reinforced. In addition, since the internal resistance of the battery cell 10 may be reduced, the width (in the circumferential direction) of the electrode coupling portion 330 may be reduced, so that the picking portion 350 may be easily secured.

If the length (a), the length (b), the length (c), and the length (d) are designed as above, various dimensions of the cover 300, such as the weld flatness, the weld length, and the diameter of the injection hole H1 of the cover 300, may be aligned.

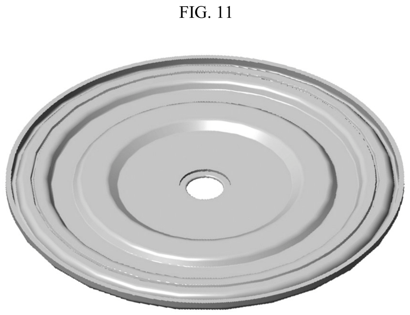

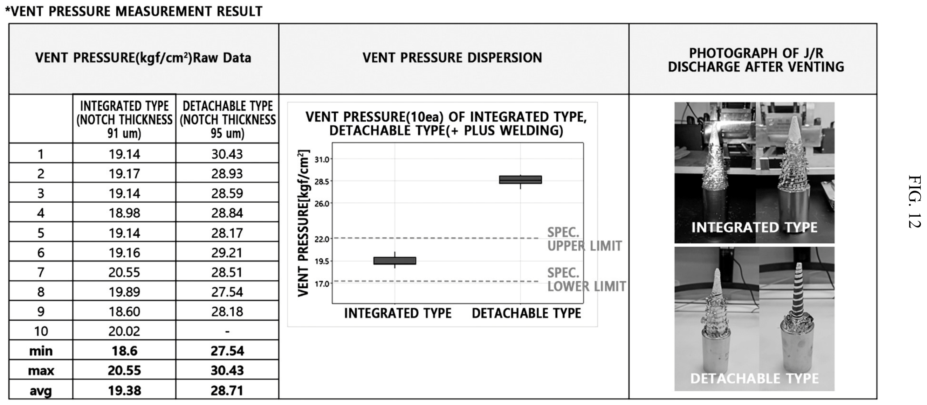

FIG. 11 is a drawing showing a conventional detachable cover/lead, and FIG. 12 is a table comparatively showing the vent pressure (e.g., the pressure at which the vent portion ruptures) of the cover/lead according to the present disclosure and the conventional detachable cover/lead.

Referring to FIGS. 3 to 10, since the vent portion 370 is provided in the cover 300 and does not occupy a separate space, energy density may be further secured. The vent portion 370 may be ruptured when the pressure inside the battery housing 200 exceeds a critical value. The vent portion 370 may be formed on one or both sides of the cover 300 (e.g., an inside facing the electrode assembly 100 and/or an outside facing away from the electrode assembly 100). The vent portion 370 may be formed by notching along a circumferential direction on the inner side of the edge portion 320 of the cover 300. The vent portion 370 may form a continuous or discontinuous circular pattern (e.g., plurality of circular segments), a linear pattern, or other patterns on the surface of the cover 300. For example, the vent portion 370 may be formed in an approximately circular ring shape having a predetermined width. The circular ring-shaped vent portion 370 may have the same center as the center of the cover 300. For example, the vent portion 370 may be implemented as a thin-walled portion in which both surfaces of the cover 300 are notched. If the vent portion 370 is formed in the cover 300, venting gas may be easily discharged from the battery cell 10.

In particular, referring to FIGS. 11 and 12, it may be found that the vent pressure of the cover 300 according to the present disclosure is formed lower than that of a conventional battery cell (e.g., the vent portion of the cover 300 may rupture at lower pressure than that of the convention cover, for example at a same thickness).

The conventional cover shown in FIG. 11 may be a detachable cover including a separate current collection plate together with the cover. The conventional cover shown in FIG. 11 may be formed in a single flat shape with no bending as a whole along the periphery of the flat portion in which the electrode coupling portion surrounds the injection hole.

FIG. 12 shows a comparative experimental example of the vent pressure of the cover (integrated type) 300 according to the present disclosure and the conventional cover (detachable type) shown in FIG. 11. Here, the vent pressure may be understood as the size of the internal pressure of the battery cell at which the vent portion 370 begins to rupture.

According to FIG. 12, it may be found that the notch thickness of the vent portion 370 of the cover 300 according to the present disclosure and the thickness of the vent portion of the conventional cover are provided at almost similar levels, 91 um and 95 um, respectively. However, the vent pressure of the cover 300 according to the present disclosure is measured to have an average of 19.4 kgf/cm² (dispersion 2.05 kgf/cm²), which is lower than the average of the vent pressure of the conventional cover, 28.7 kgf/cm² (dispersion 2.92 kgf/cm²). That is, the cover 300 according to the present disclosure may secure a thickness of the vent portion 370 similar to that of the conventional cover, thereby securing formability of the vent portion 370, and has the advantage of forming a lower vent pressure.

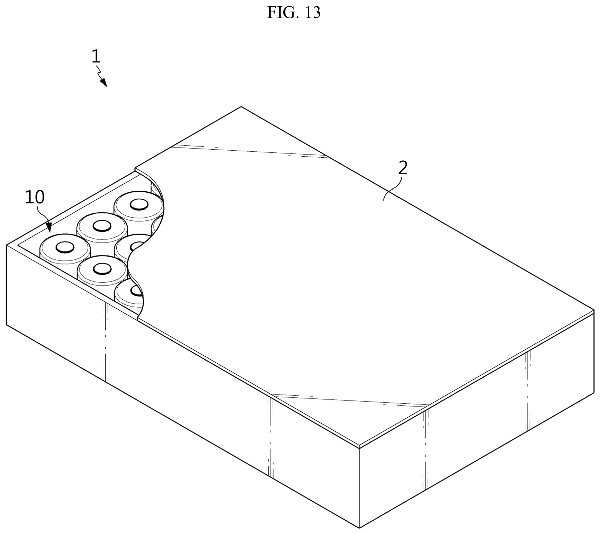

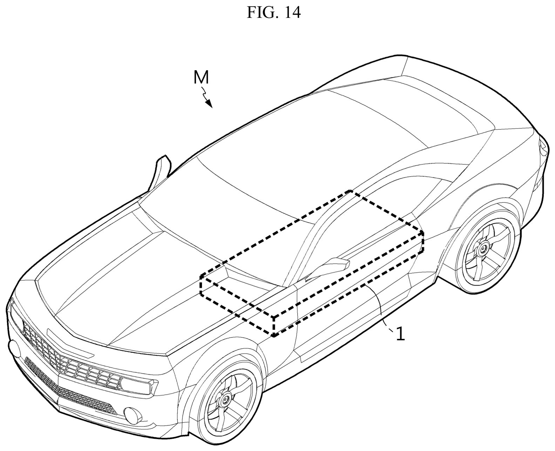

FIG. 13 is a drawing depicting a battery pack according to an embodiment of the present disclosure. FIG. 14 is a drawing depicting a vehicle including the battery pack of FIG. 13.

Referring to FIG. 13, the battery pack 1 according to the present disclosure may include at least one battery cell 10 according to the present disclosure described above. In addition, the battery pack 1 according to the present disclosure may include a pack housing 2 capable of accommodating the at least one battery cell 10. The battery pack 1 may be configured using a battery module, which is an intermediate form of assembly, or may be configured directly without the battery module (e.g., a module-less battery pack), as illustrated. Since the battery cell 10 itself has a large volume, there may be no particular difficulty in implementing the battery pack 1 even without using an intermediate structure (e.g., battery module housing) that is called a battery module.

Moreover, the battery pack 1 may further include various other components in addition to the battery cell 10, such as components of the battery pack 1, for example as known at the time of filing of this application, such as a BMS, a pack case, a relay, a current sensor, etc.

A plurality of battery cells 10 may be included in the battery pack 1. The battery cells 10 may be arranged in a predetermined number of rows. The battery cells 10 may be arranged such that both the electrode terminal having the first polarity and the electrode terminal having the second polarity of each battery cell 10 are located at the upper side. Therefore, when electrically connecting the plurality of battery cells 10, both positive electrodes and negative electrodes may be connected in one direction, thereby simplifying the electrical connection structure. Through this, the number of battery cells 10 that can be mounted in the same space may be increased, thereby improving the energy density, and facilitating electrical wiring work. Therefore, since the space efficiency is good and the electrical wiring efficiency is high, there is a significant work improvement effect in the assembly process of the electric vehicle, and in the assembly and maintenance of the battery pack 1. In addition, each of the battery cells 10 may have a higher energy density than before, as described above. The battery pack 1 with the increased energy density may store the same energy while reducing its volume and load.

Therefore, if the battery pack 1 to which the above battery cells 10 are applied is installed in a vehicle such as a vehicle M that uses electricity as an energy source as shown in FIG. 14, the mileage of the vehicle may be further increased in proportion to the energy consumed.

Referring to FIG. 14, the vehicle M according to the present disclosure may include at least one battery cell according to the present disclosure, in particular at least one battery pack 1 (with battery cell 10) according to the present disclosure.

The battery cell 10 according to the present disclosure may be applied to a vehicle such as an electric vehicle or a hybrid vehicle. That is, the vehicle M according to the present disclosure may include the battery cell 10 according to the present disclosure or the battery pack 1 according to the present disclosure. In addition, the vehicle M according to the present disclosure may further include various other components included in the vehicle in addition to the battery cell 10 or the battery pack 1. For example, the vehicle M according to the present disclosure may further include a body, a motor, a control device such as an ECU (electronic control unit), in addition to the battery cell 10 according to the present disclosure. The vehicle M includes a four-wheel vehicle and a two-wheel vehicle. The vehicle M may operate by receiving power from the battery pack 1 according to an embodiment of the present disclosure.

In view of the above, it will be appreciated that the present disclosure also provides the following itemized embodiments. Any of these embodiments may additionally comprise any feature or combination of features of the cover for a battery cell and/or of the battery cell according to any one of the embodiments described above.
Embodiment 1: A battery cell including:
   an electrode assembly in which a first electrode and a second electrode as well as a separator interposed therebetween are wound based on a winding axis so that a winding center hole extending in a winding axis direction is formed at a center,
   a battery housing configured to accommodate the electrode assembly through an open end formed at one side,
   a lead configured to cover the open end and having an injection hole formed at a center, and
   a plug configured to be inserted into the injection hole and seal the injection hole,

   wherein the lead includes:
      a flat portion surrounding the injection hole,
      an edge portion formed at an edge so as to be coupled to the battery housing, and a plurality of electrode coupling portions coupled to the electrode assembly to be spaced apart from each other between the flat portion and the edge portion and respectively formed as an engraved depression,
   wherein the flat portion is arranged to be spaced apart from the electrode assembly in the winding axis direction.
Embodiment 2: The battery cell of embodiment 1, wherein a separation distance in the winding axis direction between the flat portion and the electrode assembly is 1.5 mm or more and 2.5 mm or less.
Embodiment 3: The battery cell of embodiment 1 or 2, wherein the lead further includes a plug coupling portion into which the plug is inserted and seated and coupled, the plug coupling portion having the injection hole formed in the center.
Embodiment 4: The battery cell of embodiment 3, wherein the plug coupling portion and the flat portion are portions in which a step is formed in a radial direction.
Embodiment 5: The battery cell of embodiment 3 or 4, wherein the plug coupling portion is a portion that extends inwardly in the radial direction from the flat portion, and is formed to have a thinner thickness than the flat portion.
Embodiment 6: The battery cell of embodiment 5, wherein a thickness of the flat portion is 0.55 mm or more and 0.65 mm or less, and a difference between the thickness of the plug coupling portion and the thickness of the flat portion is 0.25 mm or more and 0.35 mm or less.
Embodiment 7: The battery cell of any one of embodiments 3 to 6, wherein a distance between the plug coupling portion and the electrode assembly is arranged to be spaced apart most in the winding axis direction than other parts of the lead.
Embodiment 8: The battery cell of any one of the preceding embodiments, wherein a distance between the flat portion and the electrode assembly is arranged to be spaced apart most in the winding axis direction than other parts of the lead.
Embodiment 9: The battery cell of any one of the preceding embodiments, wherein the plug includes an insert portion configured to be inserted into at least a part of the injection hole, and a welding portion configured to be at least partially welded to the lead.
Embodiment 10: The battery cell of any one of the preceding embodiments, wherein a bottom surface of the electrode coupling portion is face-to-face coupled with the electrode assembly.
Embodiment 11: The battery cell of any one of the preceding embodiments, wherein the electrode coupling portions are provided in plurality.
Embodiment 12: The battery cell of embodiment 11, wherein the electrode coupling portion is provided in three pieces.
Embodiment 13: The battery cell of any one of the preceding embodiments, wherein the lead further includes at least one bridge extending in a radial direction from the flat portion and formed to partition two adjacent electrode coupling portions.
Embodiment 14: The battery cell of any one of the preceding embodiments, wherein the plurality of the electrode coupling portions are formed and arranged radially rotationally symmetrically with respect to the center of the lead.
Embodiment 15: The battery cell of any one of the preceding embodiments, wherein the flat portion has a bent portion formed to be recessed toward the injection hole, and the electrode coupling portion has an extension portion extended toward the bent portion.
Embodiment 16: The battery cell of any one of the preceding embodiments, wherein the lead further includes a bent notch portion formed between the electrode coupling portion and the edge portion.
Embodiment 17: The battery cell of any one of the preceding embodiments, wherein the lead further includes a picking portion arranged between two adjacent electrode coupling portions and the edge portion and forming a picking area.
Embodiment 18: A battery pack including the battery cell according to any one of the preceding embodiments and a pack housing configured to accommodate the battery cell.
Embodiment 19: A vehicle including the battery pack according to embodiment 18.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A cover (300) for a battery cell (10), in particular a cylindrical battery cell, the cover (300) being configured to cover an open end of a battery housing (200) of the battery cell (10) for accommodating an electrode assembly (100) in the battery housing (200), wherein the cover (300) has an injection hole (H1) to be sealed by a plug (400) and comprises:
a flat portion (310) surrounding the injection hole (H1),
an edge portion (320) formed at an edge of the cover (300) so as to be coupled to the battery housing (200), and
a plurality of electrode coupling portions (330) configured to be coupled to the electrode assembly (100) of the battery cell (10), wherein the electrode coupling portions (330) are arranged between the flat portion (310) and the edge portion (320) and are spaced apart from each other, and wherein the electrode coupling portions (330) are respectively formed as a depression that is recessed from the flat portion (310) for the flat portion (310) to be spaced apart from the electrode assembly (100) when the electrode coupling portions (330) are coupled to the electrode assembly (100).

2. The cover (300) of claim 1, wherein the cover (300) further comprises a plug coupling portion (360) onto which the plug (400) is to be seated and coupled, the plug coupling portion (360) having the injection hole (H1) formed therein, wherein optionally one or both of:
a step is formed between the plug coupling portion (360) and the flat portion (310); and
the plug coupling portion (360) is formed to have a thinner thickness than the flat portion (310), in particular wherein a difference (g) between the thickness of the plug coupling portion (360) and the thickness (w) of the flat portion (310) is 0.25 mm or more and 0.35 mm or less.

3. The cover (300) of claim 2, wherein the plug coupling portion (360) comprises a seating portion (361) onto which the plug (400) is to be seated and a guide portion (362) bordering the injection hole (H1), wherein at least a part of the guide portion (362) is inclined at an angle from the seating portion (361) so as to extend from the seating portion (361) inwardly into the battery housing (200).

4. The cover (300) of any one of the preceding claims, wherein, for one or both of the flat portion (310) and the plug coupling portion (360), a distance by which the respective portion (310, 360) protrudes above the electrode coupling portions (330) is larger than the respective distance for the parts (320, 340, 350) of the cover (300) other than the flat portion (310) and/or the plug coupling portion (360).

5. The cover (300) of any one of the preceding claims, wherein the flat portion (310) extends over a length (c) of 3 mm or more in a direction away from the injection hole (H1).

6. The cover (300) of any one of the preceding claims, wherein the plurality of electrode coupling portions (330) comprises three electrode coupling portions (330).

7. The cover (300) of any one of the preceding claims, wherein the cover (300) further comprises at least one bridge (340) extending from the flat portion (310) towards the edge portion (320) and formed to partition two adjacent electrode coupling portions (330).

8. The cover (300) of claim 7, wherein the bridge (340) protrudes above the two adjacent electrode coupling portions (330) and, optionally, is recessed from the flat portion (310).

9. The cover (300) of claim 7 or 8, wherein a width of the bridge (340) in a direction between the two adjacent electrode coupling portion (330) is smaller than one or both of an inner diameter (R1) of the injection hole (H1) and a diameter of the plug coupling portion (360).

10. The cover (300) of any one of the preceding claims, wherein the plurality of the electrode coupling portions (330) are formed and arranged rotationally symmetrically with respect to the injection hole (H1).

11. The cover (300) of any one of the preceding claims, wherein, for some or all of the electrode coupling portions (330), the flat portion (310) has a respective concave portion (380) formed to be recessed toward the injection hole (H1), and wherein optionally the respective electrode coupling portion (330) has an extension portion (390) extending toward the concave portion (380).

12. The cover (300) of any one of the preceding claims, wherein the cover (300) further comprises a vent portion (370) formed between the electrode coupling portions (330) and the edge portion (320).

13. The cover (300) of any one of the preceding claims, wherein a cross-section of the edge portion (320) has a curved shaped, in particular a U-shape.

14. The cover (300) of any one of the preceding claims, wherein the cover (300) further comprises a picking portion (350) arranged between two adjacent electrode coupling portions (330) and the edge portion (320) and forming a picking area (351) to be picked by a picking device.

15. A battery cell (10) comprising:
an electrode assembly (100),
a battery housing (200) configured to accommodate the electrode assembly (100) through an open end formed at one side,
the cover (300) according to any one of the preceding claims configured to cover the open end, and
a plug (400) configured to be inserted into the injection hole (H1) and seal the injection hole (H1),
wherein the flat portion (310) is arranged to be spaced apart from the electrode assembly (100) when the electrode coupling portions (330) are coupled to the electrode assembly (100).

16. The battery cell (10) of claim 15, wherein a separation distance (S1) between the flat portion (310) and the electrode assembly (100) is 1.5 mm or more and 2.5 mm or less.

17. The battery cell (10) of claim 15 or 16, wherein the cover (300) further comprises a plug coupling portion (360) onto which the plug (400) is to be seated and coupled, the plug coupling portion (360) having the injection hole (H1) formed in the center.

18. The battery cell (10) of claim 17, wherein the electrode assembly (100) is wound around a winding center hole (H) and the plug coupling portion (360) extends in a direction away from the injection hole (H1) to beyond an edge of the winding center hole (H).

19. The battery cell (10) of claim 17 or 18, wherein the plug coupling portion (360) comprises a seating portion (361) onto which the plug (400) is to be seated and a guide portion (362), wherein the seating portion (361) extends from the flat portion (310) towards the injection hole (H1) and the guide portion (362) extends from the seating portion (361) inwardly into the battery housing (200), wherein optionally a distance by which the guide portion (362) is spaced apart from the electrode assembly (100) is between 0.4 mm and 0.8 mm.

20. The battery cell (10) of any one of claims 15 to 19, wherein, for one or both of the flat portion (310) and the plug coupling portion (360), a distance (S1) by which the respective portion (310, 360) is spaced apart from the electrode assembly (100) when the electrode coupling portions (330) are coupled to the electrode assembly (100) is larger than the respective distance (S3) for the parts of the cover (300) other than the flat portion (310) and/or the plug coupling portion (360).

21. The battery cell (10) of any one of claims 15 to 20, wherein the plug (400) comprises an insert portion (410) configured to be inserted into at least a part of the injection hole (H1), and a coupling portion (420) configured to be coupled, in particular to be at least partially welded, to the cover (300).

22. The battery cell (10) of claim 21, wherein a step is formed at an edge of the coupling portion (420) of the plug (400) facing away from the insert portion (410).

23. The battery cell (10) according to any one of claims 15 to 22, wherein the plug (400), when inserted into the injection hole (H1), protrudes from the cover (300) towards the electrode assembly (100).

24. The battery cell (10) of any one of claims 15 to 23, wherein a surface of the electrode coupling portions (330) is face-to-face coupled with the electrode assembly (100).

25. The battery cell (10) of any one of claims 15 to 24, wherein:
the electrode assembly (100) comprises a first electrode and a second electrode, as well as, optionally, a separator interposed therebetween, being wound around a winding axis so that a winding center hole (H) extending in a winding axis direction is formed at a center;
the injection hole (H1) is formed at a center of the cover (300); and
the flat portion (310) is arranged to be spaced apart from the electrode assembly (100) in the winding axis direction when the electrode coupling portions (330) are coupled to the electrode assembly (100).

26. A battery pack (1) or battery module comprising the battery cell (10) according to any one of claims 15 to 25 and a pack housing (2) and module housing, respectively, configured to accommodate the battery cell (10).

27. A vehicle (M) comprising the battery cell (10) according to any one of claims 15 to 25, in particular wherein the vehicle (M) comprises the battery pack (1) or battery module according to claim 26 comprising said battery cell (10).
